# EUROPÄISCHE PATENTSCHRIFT

(11) **EP 1 462 697 B1**
(45) Veröffentlichungstag und Bekanntmachung des Hinweises auf die Patenterteilung: **07.05.2008**
(21) Anmeldenummer: 04005361.3
(22) Anmeldetag: 05.03.2004
(51) Int. Cl.: F16K 41/12, F16K 1/20

(54) **Pneumatisch betätigtes Ventil**
Pneumatic operated valve
Vanne actionnée pneumatiquement

(30) Priorität: 06.03.2003 DE 10309876; 07.04.2003 DE 10315794
(43) Veröffentlichungstag der Anmeldung: 29.09.2004
(73) Patentinhaber: AVS Ing. J.C. Römer GmbH, 82549 Königsdorf (DE)
(72) Erfinder: Römer, Joachim, 82049 Pullach (DE)
(74) Vertreter: Manitz, Finsterwald & Partner GbR

(56) Entgegenhaltungen:
- DE-B- 1 215 621
- DE-B- 1 275 015
- FR-A- 1 117 645
- US-A- 4 285 497
- US-A- 4 561 632
- US-A- 5 913 505
- US-A- 6 003 552
- US-B1- 6 186 175

## Beschreibung

Die Erfindung betrifft ein Ventil nach dem Oberbegriff des Anspruchs 1. Ein Ventil dieser Art ist beispielsweise aus der US-A-4,285,497 in Form eines elektromagnetisch betätigten Ventils bekannt.

Derartige Ventile sind grundsätzlich bekannt. Problematisch gestaltet sich bei solchen Ventilen eine fluiddichte Trennung eines Raumes, durch den ein Fluid strömt, dessen Strömung durch das Ventil gesteuert werden soll, von einem Raum, in dem ein Betätigungsmechanismus des Ventils untergebracht ist. Außerdem besteht bei bekannten Ventilen das Problem, dass sich zwischen einem Ventilsitz und einem Ventilköper Partikel festsetzen können, die ein korrektes Verschließen des Ventils verhindern.

Eine Aufgabe der vorliegenden Erfindung ist es, ein pneumatisch betätigtes Ventil zu schaffen, bei dem ein Betätigungsmechanismus besonders wirksam gegenüber der Fluidströmung abgedichtet ist.

Eine weitere Aufgabe der vorliegenden Erfindung ist es, ein pneumatisch betätigtes Ventil zu schaffen, das einerseits bei einer kompakten und preisgünstigen Bauweise eine ausreichende Bewegungsamplitude des Ventilkörpers zulässt und andererseits aber für eine ausreichende Schließkraft sorgt. Es soll darüber hinaus sichergestellt werden dass das Ventil über einen breiten Bereich von Betätigungsdrücken zuverlässig ohne vorgeschalteten Druckminderer arbeitet, bspw. zwischen 4 bar und 10 bar, ohne dass die auf den Ventilsitz ausgeübte Kraft so hoch wird, dass die Dichtfläche beschädigt wird.

Zur Lösung der Aufgabe ist ein Ventil mit den Merkmalen des Anspruchs 1 vorgesehen.

Gemäß Anspruch 1 handelt es sich dabei um ein Ventil mit einem an einem Ende eines Schwenkhebels angebrachten Ventilkörper, der in einer ersten Schließ- bzw. Schwenkposition gegen einen Ventilsitz schließt, um einen Strömungsweg durch den Ventilsitz zu verschließen, und in einer zweiten Schwenkposition diesen Strömungsweg freigibt, um einen Durchfluss durch das Ventil zu einem Ausgang oder zu mehreren Ausgängen zu ermöglichen, wobei der Schwenkhebel ein zweiarmiger Schwenkhebel mit einer zwischen seinen beiden Arme vorgesehenen Schwenkachse ist, die einen ersten Arm zwischen der Schwenkachse und dem Ventilkörper und einen zweiten Arm zwischen der Schwenkachse des Schwenkhebels und einer Betätigungseinrichtung aufweist, die am zweiten Arm des Schwenkhebels angreift, wobei die pneumatische Betätigungseinrichtung in einer Betätigungsrichtung durch pneumatische Belastung eines Kolbens betätigt wird, und der Kolben in die andere Betätigungsrichtung durch den Druck einer Feder beaufschlagt wird, im Bereich der Schwenkachse eine flexible Dichtung vorgesehen ist, die den Strömungsraum des Ventils vom Betätigungsraum zumindest im Wesentlichen fluiddicht trennt, die Schwenkbewegung des Schwenkhebels jedoch zulässt, wobei das Ventil sich dadurch auszeichnet, dass die Betätigungseinrichtung eine pneumatische Betätigungseinrichtung ist, dass der Kolben einen mit pneumatischem Druck belastbaren und eine mit einem Dichtring versehene Mantelfläche sowie in einem Abstand davon einen Flanschteil aufweist, dass ein Bolzen mit einem Kopfteil, der eine Querbohrung, die den zweiten Arm des Schwenkhebels aufnimmt und sich zwischen dem Dichtring und dem Flanschteil befindet, sowie einen Schaftteil aufweist, der sich durch den Flanschteil des Kolbens sowie die als Schraubendruckfeder ausgebildete Feder hindurch erstreckt, die sich am Flanschteil abstützt; dass eine Hilfsfeder zwischen einem Anschlag am Schaftteil und dem Flanschteil des Kolbens vorgesehen ist; dass zwischen dem Bolzenkopf und dem Kolben ein Freiraum besteht, der eine axiale Bewegung des Bolzens relativ zum Kolben zulässt; und dass sich bei einem erhöhten Betätigungsdruck der Kolben unter Komprimierung der Feder bewegt, wodurch sich zwischen dem Kopfteil und dem Flanschteil des Kolbens ein Spalt bildet, wodurch die Kraft der Hilfsfeder die Klemmkraft zwischen dem ersten Arm und dem Ventilsitz auf einen Betrag begrenzt, der von der Hilfsfeder vorgegeben ist.

Vorzugsweise weist der Bolzenkopf eine Querbohrung auf, die den zweiten Arm des Schwenkhebels in ihrer Mitte zumindest im Wesentlichen spielfrei aufnimmt, wobei auf beiden Seiten der Mitte Freiräume zum Zulassen der Schwenkbewegung vorgesehen sind.

Gemäß einer Ausführungsform besteht die flexible Dichtung aus einem Ring, der außen an der Aufnahmekammer und innen am Schwenkhebel angeklebt ist.

Vorteilhafterweise weist der Ring auf zwei Seiten Ringausnehmungen auf, zwischen denen ein durchgehender Steg verbleibt, um die Flexibilität der Dichtung sicherzustellen.

Die Verklebung zwischen der flexiblen Dichtung und der Wand der Aufnahmekammer bzw. der Außenseite des Schwenkhebels kann durch eine dort versehene Aufrauung bzw. ein dort vorgesehenes Gewinde verbessert sein.

Gemäß einer weiteren Ausführungsform ist die Dichtung durch eine ringförmige Membran gebildet, die in ihrem radial inneren Bereich zwischen zwei Halbkugeln geklemmt ist, die am Schwenkhebel befestigt sind, und die in ihrem radial äußeren Bereich zwischen zwei Scheiben geklemmt ist, die innerhalb der ringförmigen Aufnahmekammer angeordnet sind und einerseits vom Betätigungsgehäuse und andererseits vom Ventilgehäuse geklemmt sind; die Halbkugeln bilden eine kugelförmige Außenfläche, die in einer entsprechenden kugelförmigen Ausnehmung der zwei Scheiben schwenkbar gelagert ist; und die Scheiben weisen auf gegenüberliegenden Seiten der ringförmigen Membran jeweils eine Ausnehmung auf, um eine Verformung der Membran in diesem Bereich bei einer Verschwenkung des Schwenkhebels zuzulassen.

Vorteilhafterweise weist der Schwenkhebel im Bereich der Schwenkachse eine Kugelfläche auf, die in einer aus zwei Ringen gebildeten kugelförmigen Ausnehmung gelagert ist.

Die zwei Ringe können innerhalb eines topfförmigen Teils angeordnet sein, das mit einer Abdeckscheibe abgeschlossen ist, wobei sich der Schwenkhebel jeweils durch ein Loch im topfförmigen Teil und in der Abdeckscheibe hindurcherstreckt.

Der Ventilkörper ist bevorzugt durch ein zumindest im Wesentlichen kugelförmiges Teil gebildet, das eine Querpassage aufweist, die den ersten Arm des Schwenkhebels aufnimmt, und das durch eine Schraube am Schwenkhebel befestigt ist.

Gemäß einer weiteren Ausführungsform ist der erste Arm des Schwenkhebels blattförmig bzw. biberschwanzförmig ausgebildet und die flexible Dichtung als Dichtstrumpf ausgebildet, der über den ersten Arm gezogen ist und in einen ringförmigen Bereich mündet, der entweder in einer ringförmigen Aufnahme des Ventilgehäuses und/oder in einem zwischen Ventil- und Betätigungsgehäuse angeordneten Zwischengehäuse und/oder im Betätigungsgehäuse sitzt.

Gemäß einer besonders bevorzugten Ausführungsform ist bei einem Ventil, das bei pneumatischer Betätigung des Schwenkhebels gegen einen Ventilsitz schließt, eine Hilfsfeder vorgesehen, die die Schließkraft unabhängig vom Betätigungsdruck begrenzt.

Vorteilhafterweise ragt der Schaftteil aus dem Betätigungsgehäuse hinaus und ist der Schaltzustand des Ventils durch einen Positionssensor bestimmbar, der mit dem freien Ende des Schaftteils zusammenarbeitet.

Die Ventile können als 2/2- oder 3/2-Wegeventile sein, d.h. das Ventilgehäuse kann als Zweiwege- oder Dreiwegegehäuse ausgelegt sein.

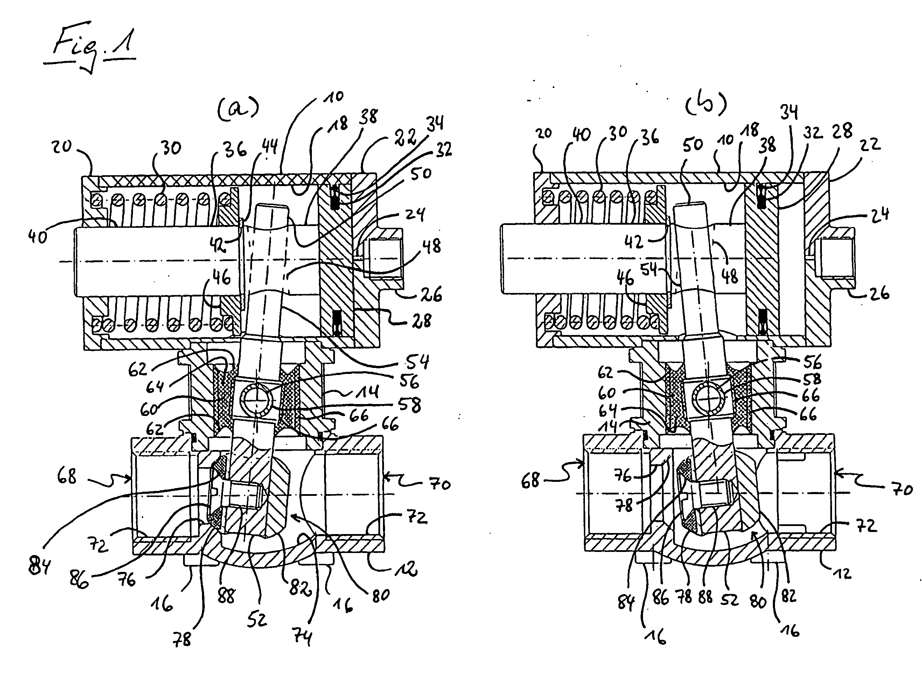

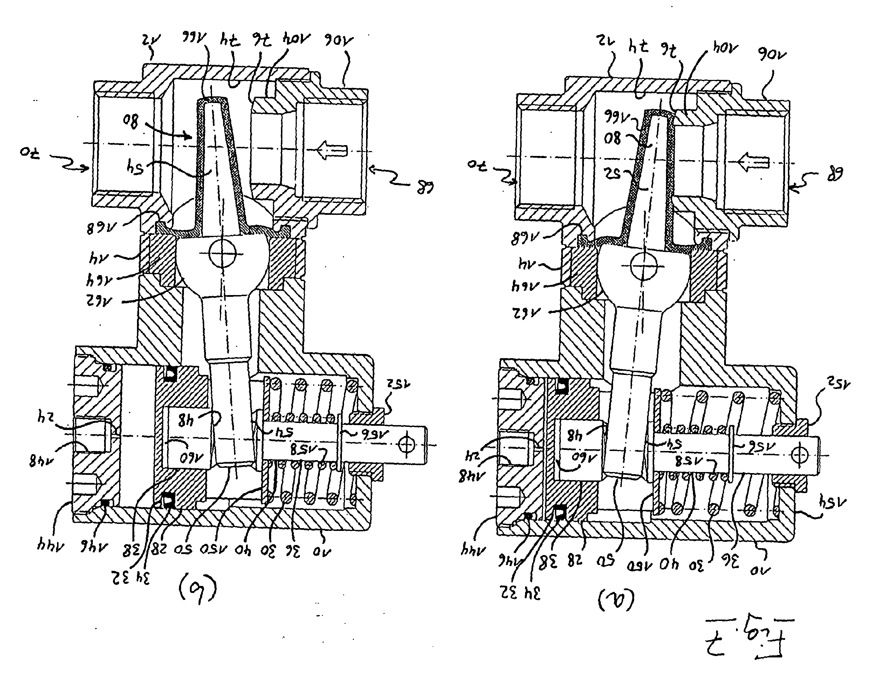

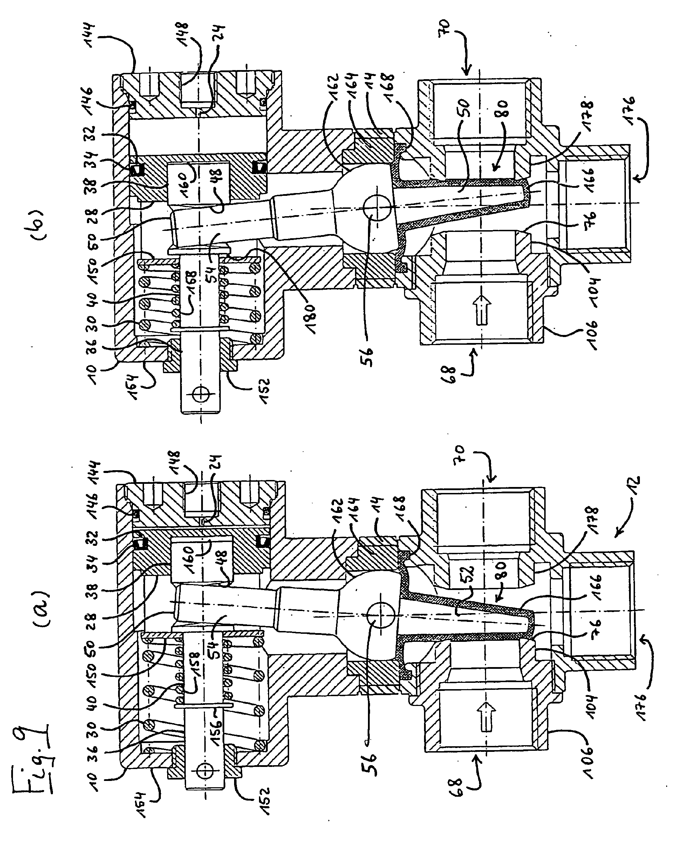

Nachfolgend wird die Erfindung rein beispielhaft anhand vorteilhafter Ausführungsformen und unter Bezugnahme auf die Zeichnung beschrieben, wobei anzumerken ist, dass die Merkmale des Anspruchs 1 erst in der Fig. 7 und in Fig. 9 zu sehen sind, wobei aber die weiteren Figuren 1 bis 6 sich mit der Auslegung des Ventils im Bereich der Schwenkachse und des Ventilsitzes befassen und diese Auslegung in Kombination mit der Ausbildung des Ventils gemäß Fig. 7 und 9 verwendet werden kann.. Es zeigen:
- Fig. 1: eine erste Ausführungsform eines pneumatisch betätigten 2/2-Wegeventils in einer (a) geschlossenen Stellung und (b) offenen Stellung;
- Fig. 2 (a)-(d): verschiedene Ansichten einer flexiblen Dichtung im Bereich der Schwenkachse des Schwenkhebels des Ventils von Fig. 1;
- Fig. 3: eine weitere Ausführungsform eines pneumatisch betätigten 2/2-Wegeventils;
- Fig. 4: eine flexible Dichtung im Bereich der Schwenkachse des Schwenkhebels des Ventils von Fig. 3;
- Fig. 5: eine weitere Ausführungsform eines pneumatisch betätigten 2/2-Wegeventils;
- Fig. 6: eine weitere Ausführungsform eines pneumatisch betätigten 2/2-Wegeventils;
- Fig. 7: eine Ausführungsform eines pneumatisch betätigten 2/2-Wegeventils mit einer Kraftbegrenzungseinrichtung in einer (a) geschlossenen und (b) offenen Stellung;
- Fig. 8 (a)-(c): verschiedene Außenansichten des Ventils von Fig. 7;
- Fig. 9 a und b: ein pneumatisch betätigtes 3/2-Wegeventil mit einer Kraftbegrenzungseinrichtung;
- Fig. 10 (a)-(c): verschiedene Außenansichten des Ventils von Fig. 9;
- Fig. 11 (a)-(c): verschiedene Außenansichten eines pneumatisch betätigten 2/2-Wege-Eckventils;
- Fig. 12: ein elektromagnetisch betätigtes 3/2-Wegeventil; und
- Fig. 13: eine Stirnansicht des Ventils von Fig. 13.

In Fig. 1 ist eine erste Ausführungsform eines pneumatisch betätigten 2/2-Wege-Schwenkventils dargestellt. Das Ventil weist eine Betätigungsgehäuse 10 und ein Ventilgehäuse 12 auf, die über ein Zwischengehäuse 14 miteinander verbunden sind. Im dargestellten Ausführungsbeispiel ist der Zusammenhalt des Betätigungsgehäuses 10, des Ventilgehäuses 12 und des dazwischen angeordneten Zwischengehäuses 14 durch Schrauben 16 sichergestellt, die in entsprechende Bohrungen im Ventilgehäuse 12 eingeführt werden, sich durch das Zwischengehäuse 14 hindurch erstrecken und in eine entsprechend ausgebildete Gewindebohrung im Betätigungsgehäuse eingreifen. Das Betätigungsgehäuses 10, das Ventilgehäuses 12 und/oder das Zwischengehäuse 14 können jeweils aus einem Metall- oder Kunststoffmaterial gebildet sein.

Das Betätigungsgehäuse 10 ist im Wesentlichen hohlzylindrisch ausgebildet und weist einen Betätigungsraum 18 auf, der an der einen Stirnseite des Betätigungsgehäuses 10 durch eine erste Stirnplatte 20 verschlossen ist, die in das Betätigungsgehäuse 10 eingeschraubt oder eingepresst sein kann, und an der anderen Stirnseite durch eine zweite Stirnplatte 22 verschlossen ist, die eine Einlassöffnung 24 für Druckluft und einen Ansatz 26 zur Ankopplung einer Druckluftleitung aufweist.

In dem Betätigungsgehäuse 10 ist ein Betätigungsmechanismus für das Ventil untergebracht ist. Dieser Betätigungsmechanismus umfasst einen Kolben 28 der durch in den Betätigungsraum 18 einströmende Druckluft entgegen der Federkraft einer Spiralfeder 30 (in der Zeichnung nach links) verschoben werden kann. Damit sowenig Druckluft wie möglich an dem Kolben vorbeiströmen kann ist der Querschnitt des Kolbens 28 an den Querschnitt des Betätigungsraums 18 angepasst. Ferner ist in der Mantelfläche des Kolbens 28 eine umlaufende Ringnut 32 vorgesehen, in der ein Dichtring 34 sitzt, der mit der Wandung des Betätigungsgehäuses 10 in Eingriff steht und einen Zwischenraum zwischen dem Kolben 28 und dem Betätigungsgehäuse 10 abdichtet.

Mit dem Kolben 28 ist ein Bolzen 36 fest verbunden, der sich in axialer Richtung des Betätigungsraums 18, d.h. in Verschieberichtung des Kolbens 28 erstreckt. Der Bolzen besteht aus einem Kopfteil 38 und einem Schaftteil 40, die jeweils durch eine umlaufende Ringnut 42 voneinander getrennt sind, in der ein Sprengring 44 sitzt. Auf das Schaftteil 40 ist ein Kolbenteller 46 aufgesteckt, der sich an dem Sprengring 44 abstützt.

Die Feder 30 ist zwischen der ersten Stirnplatte 20 und dem Kolbenteller 46 angeordnet. Wird der Kolben 28 mit Druckluft beaufschlagt, so bewegt er sich in Richtung der ersten Stirnplatte 20 und die Feder 30 wird komprimiert. Bei einem Abschalten der Druckluft, kann sich die Feder 30 wieder entspannen, so dass der Kolben 28 durch den Druck der Feder 30 auf den Kolbenteller 46 und somit über den Sprengring 44 auf den Bolzen 36 in Richtung der zweiten Stirnplatte 22 bewegt wird.

In dem Kopfteil 38 des Bolzens 36 ist eine Querbohrung 48 vorgesehen, die zur Aufnahme eines stabförmig ausgebildeten Schwenkhebels 50 dient, der einen im Wesentlichen runden Querschnitt aufweist. Die Querbohrung 48 ist eine Durchgangsbohrung, die derart dimensioniert ist, dass sie Schwenkhebel 50 in ihrer Mitte zumindest im Wesentlichen spielfrei aufnimmt, wobei auf beiden Seiten der Mitte bspw. konusförmige Freiräume zum Zulassen einer Schwenkbewegung des Schwenkhebels 50 vorgesehen sind. Die Querbohrung 48 weist mit anderen Worten einen Durchmesser auf, der sich von der Eintrittsöffnung zur Mitte der Bohrung hin verkleinert und zur Austrittsöffnung wieder vergrößert.

Das freie Ende des Schaftteils 40 ragt durch eine Bohrung in der Stirnwand des Betätigungsgehäuses 10 aus diesem hinaus. Durch einen Positionssensor, der mit dem freien Ende des Schaftteils 40 zusammenwirkt, ist der Schaltzustand des Ventils feststellbar.

Durch eine Bohrung in der Wandung des Betätigungsgehäuses 10 erstreckt sich der Schwenkhebel 50 von dem Betätigungsraum 18 durch das Zwischengehäuse 14 hindurch bis in das Ventilgehäuse 12. Der Schwenkhebel ist schwenkbar gelagert, wobei die Schwenkachse durch das Zwischengehäuse 14 verläuft und den Schwenkhebel 50 in einen ersten Arm 52, der sich in das Ventilgehäuse 12 erstreckt, und einen zweiten Arm 54 aufteilt, der in das Betätigungsgehäuse 10 hineinragt. Der erste Arm 52 ist kürzer als der zweite Arm 54. Im Bereich der Schwenkachse weist der Schwenkhebel 50 einen vergrößerten Durchmesser auf. Das Zwischengehäuse 14 weist eine im Wesentlichen hohlzylindrische Gestalt auf, und bildet eine Aufnahmekammer deren Längsmittelachse rechtwinklig zur Längsmittelachse des Betätigungsraums 18 verläuft.

Die Schwenkachse ist durch einen Stift 56 gebildet, der sich durch eine in dem Schwenkhebel 50 vorgesehene Querbohrung erstreckt und der links und rechts des Schwenkhebels 50 jeweils durch eine Buchse 58 hindurch verläuft. Die Buchsen 58 sind fest in das Zwischengehäuse 14 eingesetzt. Der Stift 56 kann seinerseits fest in den 58 Buchsen sitzen, bspw. eingeklebt sein. In diesem Fall muss die Querbohrung des Schwenkhebels 50 eine möglichst leichtgängige Verdrehung des Schwenkhebels 50 bezüglich des Stifts 56 zulassen. Oder der Stift 56 ist drehbar in den Buchsen 58 gelagert. Dann kann der Stift 56 beweglich oder fest in dem Schwenkhebel 50 aufgenommen sein.

Im Bereich der Schwenkachse, d.h. in der Aufnahmekammer des Zwischengehäuses 14 ist der Schwenkhebel 50 von einer flexiblen Dichtung umgeben, die aus einem Ring 60-besteht, der an seiner- äußeren Seite an dem Zwischengehäuse 14 und an seiner inneren Seite am Schwenkhebel 50 anvulkanisiert oder angeklebt ist. Die Verbindung zwischen der flexiblen Dichtung 60 und der Wand der Aufnahmekammer bzw. der Außenseite des Schwenkhebels 50 kann durch eine dort versehene Aufrauung bzw. ein dort vorgesehenes Gewinde 66 verbessert sein. An seiner Oberseite und seiner Unterseite weist der Ring 60 jeweils eine Ringausnehmung 62 auf, zwischen denen ein durchgehender Steg 64 verbleibt, um die Flexibilität der Dichtung bei einer Verschwenkung des Schwenkhebels 50 sicherzustellen.

Das Ventilgehäuse 12 ist im Wesentlichen hohlzylindrisch ausgebildet und besitzt an seinem einen Stirnende eine Eintrittsöffnung 68 und an seinem anderen Stirnende eine Austrittsöffnung 70, in die jeweils ein Normeinsatz 72 zur Ankopplung einer Schlauch- oder Rohrleitung eingeschraubt ist. Möglich wäre auch ein Presssitz oder eine Verklebung der Normeinsätze 72 in dem Ventilgehäuse. In dem Bereich, in dem das Ventilgehäuse 12 an das Zwischengehäuse 14 angeschlossen ist, ist in der Wandung des Ventilgehäuses 12 außerdem eine Bohrung vorgesehen, durch die hindurch sich der Schwenkhebel 50 in das Ventilgehäuse 12 erstreckt.

Das Ventilgehäuse 12 definiert einen Strömungsraum 74 für ein Fluid, dessen Strömung durch das Ventils gesteuert werden soll. Zu diesem Zweck ist in dem Strömungsraum 74 ein Ventilsitz 76 vorgesehen, der die Gestalt einer an der Wandung des Ventilgehäuses 12 umlaufenden Schulter mit einer abgeschrägten Sitzfläche 78 aufweist. Die Sitzfläche 78 wirkt mit einem Ventilköper 80 zusammen, der im Bereich des freien Endes des ersten Armes 52 des Schwenkhebels 50 vorgesehen ist.

Der Ventilkörper 80 ist durch ein zumindest im Wesentlichen kugelförmiges Teil 82 gebildet ist, das eine Querpassage aufweist, die den ersten Arm 52 des Schwenkhebels 50 aufnimmt. Auf der zum Ventilsitz 76 weisenden Seite weist der Ventilkörper 80 einen Aufsatz 84 aus einem nachgiebigen Material auf, der als Abdichtfläche für den Ventilsitz 76 dient, wobei der Aufsatz die kugelige Form mitbestimmt. Mittels einer Schraube 86 sind der Aufsatz 86 und das kugelförmige Teil 82 an dem Schwenkhebel 50 befestigt. Die Schraube 86 greift dabei in ein als Querbohrung 88 im ersten Arm 52 des Schwenkhebels 50 vorgesehenes Gewinde ein. Der Kopf der Schraube 86 ist als Senkkopf ausgebildet, der in einer entsprechenden Senke im Aufsatz 84 versenkt ist.

Fig. 1a zeigt eine Situation, in der der Kolben 28 nicht durch Druckluft beaufschlagt, sondern durch die Feder 30 an die zweite Stirnplatte 22 des Betätigungsgehäuses gedrückt wird. Der zweite Arm 54 des Schwenkhebels 50 befindet sich somit in seiner äußersten rechten Position und der erste Arm 52 in seiner äußersten linken Position. In dieser Lage drückt der Ventilkörper 80 mit seinem Aufsatz 84 gegen die abgeschrägte Sitzfläche 78 des Ventilsitzes 76 und verschließt diesen. Damit ist der Strömungsweg von der Eintrittsöffnung 68 zur Austrittsöffnung 70 unterbrochen.

Fig. 1b zeigt dagegen die offene Stellung des Ventils. In dieser Stellung ist der Kolben 28 durch Druckluft beaufschlagt und in Richtung der ersten Stirnplatte 20 des Betätigungsgehäuses 10 verschoben. Der zweite Arm 54 des Schwenkhebels 50 befindet sich somit in seiner äußersten linken Position und der erste Arm 52 in seiner äußersten rechten Position. In dieser Lage ist der Ventilkörper 80 zu dem Ventilsitz 76 beabstandet, und der Strömungsweg von der Eintrittsöffnung 68 zur Austrittsöffnung ist freigegeben. Bei dieser Ausführungsform ist der pneumatische Betätigungsdruck unkritisch, da der Ventilkörper im offenen Zustand des Ventils frei schwebend im Ventilgehäuse sitzt und nicht durch den Betätigungsdruck gegen einen Ventilsitz gedrückt wird.

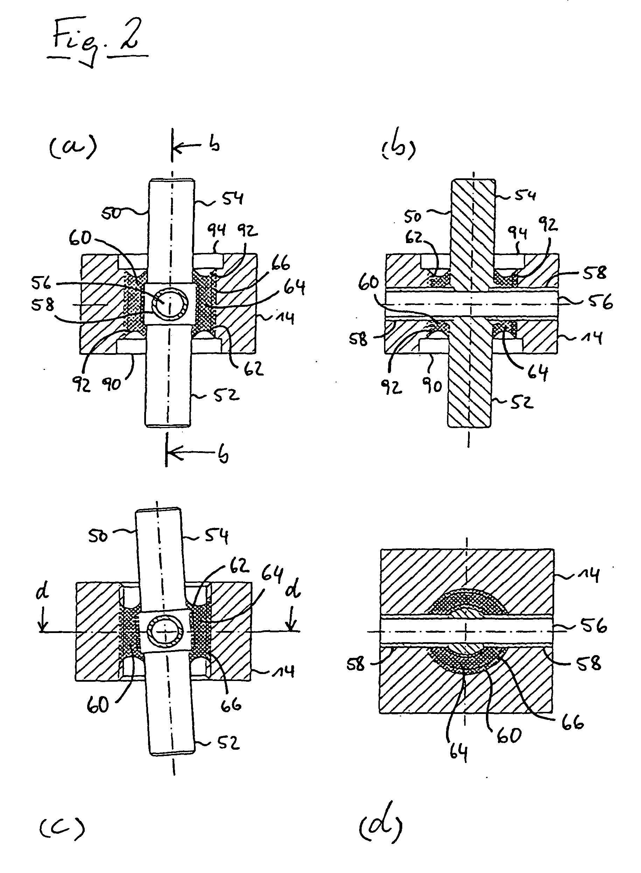

In den Fig. 2 ist dargestellt, wie die flexible Dichtung der Ausführungsform von Fig. 1 gebildet wird: Der Schwenkhebel 50 wird, wie oben beschrieben, mittels Stift 56 und Buchsen 58 in dem Zwischengehäuse 14 montiert. Die Innenwand des Zwischengehäuses 14 kann mit einer glatten oder aufgerauten Zylinderfläche 65 (Fig. 2a) oder mit einem Gewinde 66 versehen sein (Fig. 2c). Die untere Stirnöffnung des Zwischengehäuses 14 wird durch eine erste Formplatte 90 verschlossen, die in das Zwischengehäuse 14 eingesetzt (Fig. 2a und 2b) bzw. eingeschraubt wird (Fig. 2c). Die Formplatte 90 weist eine ringförmige Erhöhung 92 auf, die in das Innere des Zwischengehäuses 14 ragt. Als nächstes wird auch die obere Stirnöffnung des Zwischengehäuses 14 durch eine zweite Formplatte 94 verschlossen, die ebenfalls eine ringförmige Erhöhung 92 aufweist. Dann wird durch eine nicht gezeigte Füllöffnung eine flüssige, gummiartige Dichtmasse in das Zwischengehäuse 14 eingefüllt. Nach dem Aushärten des Dichtmaterials werden die Formplatten 90, 94 aus dem Zwischengehäuse 14 entfernt. Zurück bleibt ein flexibler Dichtring 60 mit jeweils einer Ringausnehmung 62 an seiner Ober- und Unterseite (Fig. 2c und 2d).

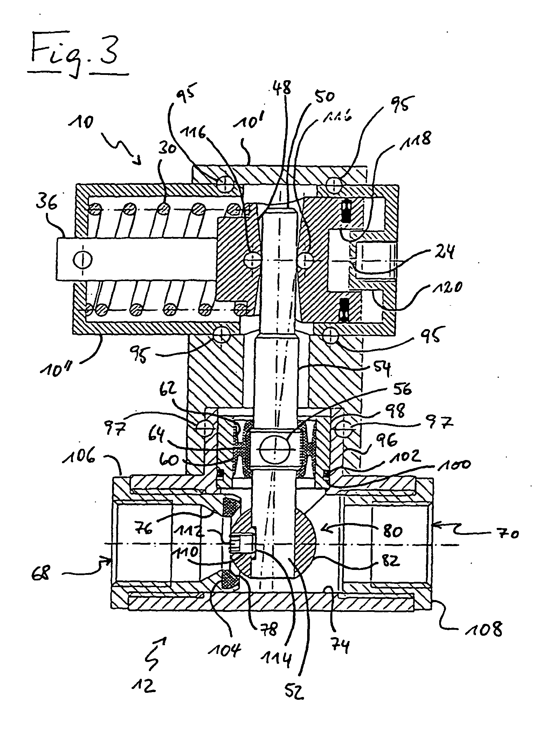

In Fig. 3 ist eine weitere Ausführungsform eines pneumatisch betätigten 2/2-Wege-Schwenkventils dargestellt. Bei dieser und auch bei den noch folgenden Ausführungsformen sind gleiche Teile oder Teile gleicher Funktion mit denselben Bezugszeichen versehen, wie sie auch bei der im Zusammenhang mit Fig. 1 beschriebenen ersten Ausführungsform bereits verwendet wurden. Es versteht sich, dass hier - wie bei allen anderen Ausführungsformen - die gleiche Beschreibung für Teile gilt, die gleiche Bezugszeichen aufweisen, d.h. diese Teile haben die gleiche Funktion wie bereits beschrieben, es sei denn, dass etwas Gegenteiliges gesagt wird.

Das in Fig. 3 gezeigte Ventil erfüllt die gleiche Funktion und weist den gleichen Betätigungsmechanismus wie das in Fig. 1 gezeigte Ventil auf. Im Folgenden wird daher nur auf die Unterschiede zur voranstehend beschriebenen Ausführungsform hingewiesen.

Das Ventil von Fig. 3 umfasst ein zweiteilig ausgebildetes Betätigungsgehäuse 10, wobei ein erstes Teil 10' an dem Ventilgehäuse 12 befestigt ist und eine Querbohrung aufweist, die einen Betätigungszylinder 10" aufnimmt, in dem der Betätigungsmechanismus untergebracht ist. Der Betätigungszylinder 10" ist durch Querstifte 95 am ersten Teil 10' des Betätigungsgehäuses 10 befestigt. Um die Schwenkbewegung des Schwenkhebels 50 zuzulassen weist die Wandung des Betätigungszylinders 10" im Bereich des Schwenkhebels 50 eine Öffnung und der erste Teil 10' des Betätigungsgehäuses 10 im Bereich des Schwenkhebels 50 eine Kammer auf.

In das erste Teil 10' des Betätigungsgehäuses 10 ist ein Ansatz 96 des Ventilgehäuses 12 einsteckt. Aufgrund des Ansatzes 96 weist das Ventilgehäuse 12 eine T-förmige Gestalt auf, wobei der Strömungsraum 74 rechtwinklig zum Ansatz 96 und somit rechtwinklig zur Längserstreckung des ersten Teils 10' des Betätigungsgehäuses 10 verläuft.

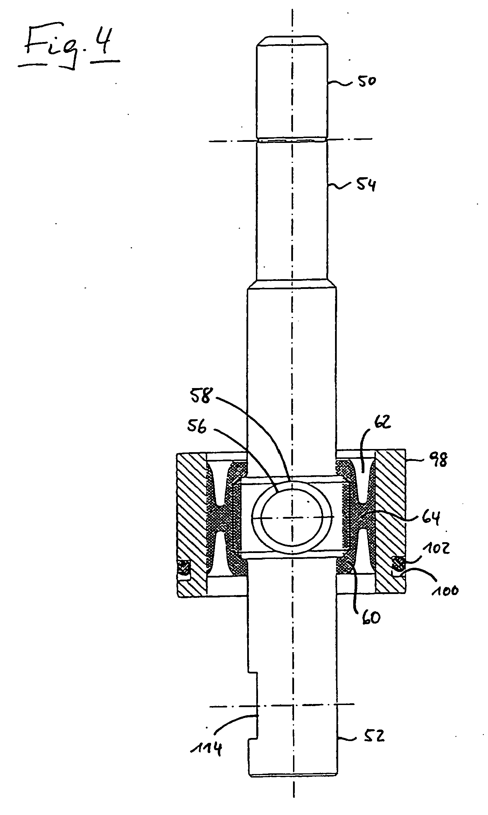

In den Ansatz 96 des Ventilgehäuses 12 ist ein Einsatz 98 eingesetzt, der den Aufnahmeraum definiert, durch den der die Schwenkachse des Schwenkhebels 50 bildende Stift 56 verläuft (vgl. dazu auch Fig. 4). In dem Einsatz 98 sind die Buchsen 58 zur Aufnahme des den Schwenkhebel haltenden Stiftes 56 gelagert. An seiner Außenseite weist der Einsatz eine umlaufende Nut 100 auf, in der ein Dichtring 102 sitzt, um den Einsatz gegenüber dem Ansatz 96 des Ventilgehäuses 12 fluiddicht abzudichten. Der Stift 56 bestimmt die Position des Einsatzes 98 und trägt dazu bei, das Betätigungsgehäuse 10 an dem Ventilgehäuse 12 zu befestigen. Diese Funktion wird bei dieser Ausführungsform auch von den Schrauben 97 mit erfüllt.

Auch bei dieser Ausführungsform ist der Schwenkhebel 50 im Bereich der Schwenkachse mit einer flexiblen Dichtung in Gestalt eines Ringes 60 versehen. Allerdings sind die Ringausnehmungen 62 hier wesentlich tiefer ausgebildet als bei der in Fig. 1 gezeigten Ausführungsform. Während der Dichtring 60 an seiner Innenseite wieder mit dem Schwenkhebel 50 verbunden ist, ist er an seiner Außenseite mit der inneren Umfangsfläche des Einsatzes 98 verklebt.

Der Ventilsitz 76 ist durch ein aus einem nachgiebigen Material bestehendes Ringteil 104 mit einer abgeschrägten Sitzfläche 78 gebildet, das in einer formschlüssigen Aufnahme eines ersten Einlassteils 106 montiert ist, welches von der Eintrittsöffnung 68 her in das Ventilgehäuse 12 eingesetzt ist, bspw. eingeschraubt ist. Von der Austrittsöffnung 70 des Ventilgehäuses 12 her ist ein zweites Einlassteil 108 in das Ventilgehäuse 12 eingesetzt.

Der mit dem Ringteil 104 zusammenwirkende Ventilkörper 80 wird durch ein kugelförmiges Teil 82 gebildet, dass auf den Schwenkhebel aufgesetzt ist. Auf seiner zum Ventilsitz 76 weisenden Seite ist in dem kugelförmigen Teil 82 eine Gewindebohrung 110 zur Aufnahme einer Schraube 112 vorgesehen, die sich mit einem Stirnende an einer Abflachung 114 des ersten Armes 52 des Schwenkhebels 50 abstützt, wenn sie in die Gewindebohrung hinein gedreht wird, und dadurch das kugelförmige Teil 82 am Schwenkhebel 50 fixiert.

Der zweite Arm 54 des Schwenkhebels ist in dem Kolben 28 gelagert. Zu diesem Zweck weist der Kolben eine Querbohrung 48 auf die den zweiten Arm 54 des Schwenkhebels 50 in ihrer Mitte zumindest im Wesentlichen spielfrei aufnimmt. Der Durchmesser der Querbohrung 48 nimmt von Eintrittsöffnungen zur Mitte hin jeweils ab, so dass außerhalb der Mitte der Querbohrung 48 Freiräume zum Zulassen der Schwenkbewegung gebildet sind. In der Mitte der Querbohrung 48 sind auf gegenüberliegenden Seiten der Querbohrung 48 zwei Stifte 116 in den Kolben eingelassen, die mit dem Schwenkhebel 50 in Kontakt stehen und die Führung des Schwenkhebels 50 in der Querbohrung 48 verbessern.

An einer ersten Stirnseite des Kolbens 28 ist ein Bolzen 36 angebracht, der jedoch keinen Kopfteil oder Schaftteil aufweist. Die Feder 30 stütz sich unmittelbar an der ersten Stirnseite des Kolbens 28 ab. An seiner zweiten Stirnseite weist der Kolben 28 eine Ausnehmung 118 auf, in die eine in den Betätigungsraum 18 ragende topfförmige Einbuchtung 120 der Stirnwand 122 des Betätigungsgehäuses eingreift, wenn der Kolben 28 durch die Feder 30 (in der Zeichnung nach rechts) an die Stirnwand 122 gedrückt wird. Die topfförmige Einbuchtung 120 dient zur Ankopplung des Betätigungsgehäuses 10 an eine Druckluft führende Schlauch- oder Rohrleitung. In dem Boden der Einbuchtung 120 ist eine Einlassöffnung 24 für die Druckluft vorgesehen.

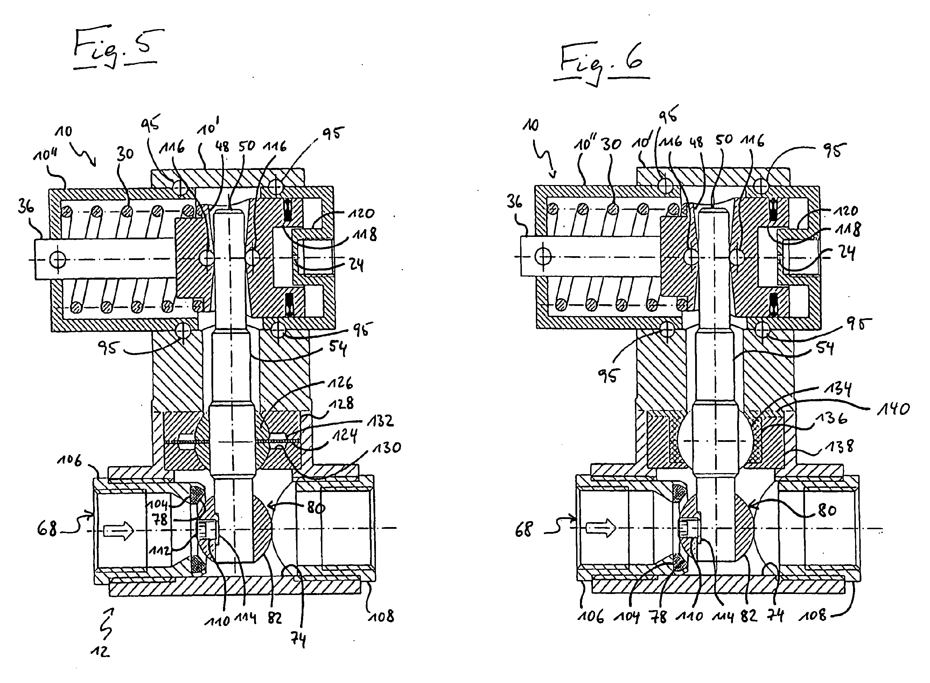

In Fig. 5 ist eine weitere Ausführungsform eines pneumatisch betätigten 2/2-Wege-Schwenkventils dargestellt, die sich von dem in Fig. 3 gezeigten Ventil im Wesentlichen durch die Ausbildung der flexiblen Dichtung unterscheidet.

Bei der Ausführungsform von Fig. 5 ist die Dichtung durch eine ringförmige Membran 124 gebildet ist, die in ihrem radial inneren Bereich zwischen zwei Halbkugeln 126 geklemmt ist, die am Schwenkhebel 50 befestigt sind, und die in ihrem radial äußeren Bereich zwischen zwei Scheiben 128 geklemmt ist. Die zwei Scheiben 128 sind in einer ringförmigen Aufnahmekammer angeordnet, die bei dieser Ausführungsform direkt durch den Ansatz 96 am Ventilgehäuse 12 gebildet ist, und werden einerseits vom Betätigungsgehäuse 10 und andererseits vom Ventilgehäuse 12 geklemmt.

Die Halbkugeln 126 weisen jeweils eine durchgehende Bohrung auf, durch die sich der Schwenkhebel 50 erstreckt. Die Halbkugeln 126 sind auf den Schwenkhebel aufgeschraubt und/oder an diesen angeklebt und bilden eine kugelförmige Außenfläche, die in einer entsprechenden kugelförmigen Ausnehmung der zwei Scheiben 128 schwenkbar gelagert ist.

Die Scheiben 128 weisen auf gegenüberliegenden Seiten der ringförmigen Membran 124 jeweils eine Ausnehmung 130 auf, die sich innerhalb von Ringschultern 132 der Scheiben 128 befinden, die die Membran 124 in ihrem radial äußeren Bereich zwischen sich einklemmen. Die Ausnehmungen 130 lassen eine Verformung der Membran 124 in diesem Bereich bei einer Verschwenkung des Schwenkhebels 50 zu. Die Halbkugeln 126 und/oder die Scheiben 128 bestehen aus Metall oder Kunststoff.

In Fig. 6 ist eine weitere Ausführungsform eines pneumatisch betätigten 2/2-Wege-Schwenkventils dargestellt, die sich von dem in Fig. 5 gezeigten Ventil lediglich durch die Ausbildung der flexiblen Dichtung unterscheidet.

Bei dem in Fig. 6 gezeigten Ventil weist der Schwenkhebel 50 im Bereich der Schwenkachse eine Kugelfläche auf, die am Schwenkhebel 50 durch eine auf den Schwenkhebel 50 aufgesetzte Kugel 134 mit einer Querbohrung gebildet ist. Die Kugel 134 kann auf den Schwenkhebel 50 aufgeschraubt oder aufgeklebt sein, sie kann aber auch über einen Presssitz am Schwenkhebel 50 befestigt sein oder einstückig mit diesem ausgebildet sein.

Die Kugel 134 ist in einer aus zwei Ringen 136 gebildeten kugelförmigen Ausnehmung gelagert. Die Ringe 136 sind innerhalb eines topfförmigen Teils 138 angeordnet, das mit einer Abdeckscheibe 140 abgeschlossen ist. Der Schwenkhebel 50 erstreckt sich jeweils durch ein Loch im topfförmigen Teil 138 und in der Abdeckscheibe 140 hindurch.

Sowohl die Kugel 134 als auch die Ringe 136 bestehen aus einem Metall- oder Kunststoffmaterial, z.B. Teflon, und stehen in so engem Kontakt miteinander dass einerseits eine gute Dichtwirkung zwischen der Kugel 134 und den Ringen 136 erreicht wird, anderseits aber auch eine leichte Verschwenkbarkeit des Schwenkhebels 50 sicher gestellt ist.

In Fig. 7 ist eine weitere Ausführungsform eines pneumatisch betätigten 2/2-Wege-Schwenkventils dargestellt. Fig. 7a zeigt das Ventil in einer geschlossenen Stellung und Fig. 7b in einer offenen Stellung. Auch im Folgenden gilt, dass für baugleiche oder funktionsgleiche Bauteile die gleichen Bezugszeichen wie bisher verwendet werden und dass die gleiche Beschreibung für diese Teile gilt.

Das Ventil umfasst ein Betätigungsgehäuse 10, das mittels Schrauben an ein Ventilgehäuse 12 angeschraubt ist, wobei zwischen beiden ein Zwischengehäuse 14 angeordnet ist.

Das Betätigungsgehäuse 10 weist eine Bohrung zur Aufnahme eines Kolbens 28 auf und ist an einem Ende durch ein Einschraubteil 144 mit Ringdichtung 146 verschlossen. Das Einschraubteil 144 weist eine topfförmige Ausnehmung 148 auf, die zur Ankopplung des Betätigungsgehäuses 10 an eine Druckluft führende Schlauch- oder Rohrleitung dient. In dem Boden der Ausnehmung 148 ist eine Einlassöffnung 24 für die Druckluft vorgesehen.

Der Kolben 28 umfasst ein Flanschteil 150. Zwischen dem Flanschteil 150 und einer Stirnseite 154 des Betätigungsgehäuses 10 ist eine als Schraubendruckfeder ausgebildete Feder 30 angeordnet.

In dem Kolben 28 ist ein Bolzen 36 beweglich aufgenommen, der sich durch das Flanschteil des Kolbens 28 sowie die Feder 30 hindurch erstreckt. Der Bolzen 36 weist einen Kopfteil 38 und einen Schaftteil 40 auf. In dem Kopfteil 38 ist eine Querbohrung 48 zur Aufnahme des zweiten Armes 54 des Schwenkhebels 50 vorgesehen, deren Durchmesser zur Mitte der Bohrung 48 hin kleiner wird, so dass der Schwenkhebel 50 in der Mitte der Bohrung zumindest im Wesentlichen spielfrei aufgenommen ist, während auf beiden Seiten der Mitte Freiräume zum Zulassen der Schwenkbewegung vorliegen.

An den Kopfteil 38 schließt sich ein Schaftteil 40 des Bolzens 36 an, der einen kleineren Durchmesser als der Kopfteil aufweist, so dass am Übergang vom Kopfteil 38 zum Schaftteil 40 eine Schulter gebildet ist, die innerhalb des Kolbens 28 an dem Flanschteil 150 des Kolbens 28 anliegt.

Der Schaftteil 40 erstreckt sich durch die Feder 30 hindurch und ragt durch eine Einschraubbuchse 152, die in der dem Einschraubteil 144 gegenüber liegenden Stirnseite 154 des Betätigungsgehäuses 10 vorgesehen ist, aus diesem hinaus. Optional kann der Schaltzustand des Ventils durch einen Positionssensor, der mit dem freien Ende des Schaftteils 40 zusammenarbeitet, festgestellt werden.

An dem Schaftteil 40 ist eine umlaufende Ringnut vorgesehen, in der ein Sprengring 156 sitzt, der als Anschlag für eine als Spiralfeder ausgebildete Hilfsfeder 158 wirkt, die den Schaftteil 40 umgibt und zwischen dem Sprengring 150 und dem Flanschteil 144 des Kolbens 28 angeordnet ist.

Zwischen dem Bolzenkopf 38 und dem Kolben 28 besteht ein Freiraum 160, der eine axiale Bewegung des Bolzens relativ zum Kolben zulässt. Wird durch die Einlassöffnung 24 Druckluft in den Betätigungsraum 18 eingeleitet, so bewegt sich der Kolben 28 unter Komprimierung der Feder 30 von dem Einschraubteil 144 weg (in der Zeichnung nach links). Dabei bildet sich zwischen dem Kopfteil 38 und dem Flanschteil 150 des Kolbens 28 ein Spalt, der aber durch die Hilfsfeder 158 sofort wieder geschlossen wird, die sich an dem Flanschteil 150 abstützt und auf den Sprengring 156 drückt und somit den Bolzen 36 soweit aus dem Kolben 28 herausbewegt, bis der Kopfteil 38 wieder an dem Flanschteil 150 anliegt.

Die Schwenkachse des Schwenkhebels 50 verläuft durch das Zwischengehäuse 14, das zwischen dem Betätigungsgehäuse 10 und dem Ventilgehäuse 12 angeordnet ist. Die Schwenkachse ist durch einen Stift 56 gebildet, der durch Buchsen (nicht gezeigt) verläuft, die in dem Zwischengehäuse 14 angeordnet sind. Der Schwenkhebel 50 ist im Bereich der Schwenkachse kugelsegmentartig ausgebildet. Das Kugelsegment 162 ist an seiner Unterseite plan. Das Zwischengehäuse 14 bildet einen Außenring, in dem ein Ring 164 angeordnet ist, der das Kugelsegment 162 umgibt.

Der erste Arm 52 des Schwenkhebels 50 ist blattförmig bzw. biberschwanzförmig ausgebildet und dient als Ventilköper 80. Ein Dichtstrumpf 166 ist über den ersten Arm 54 gezogen und mündet in eine ringförmige Aufnahme 168 des Ventilgehäuses 12. Der Dichtstrumpf 166 ist zwischen dem Ring 164 des Zwischengehäuses 14 und dem Ventilgehäuse 12 eingeklemmt. Der Dichtstrumpf 166 bildet eine flexible Dichtung und trennt den Strömungsraum 74 des Ventilgehäuses 12 fluiddicht von dem Betätigungsraum 18 des Betätigungsgehäuses 10 ab.

Der Ventilsitz 76 ist durch ein Ringteil 104 gebildet, das in einem Einlassteil 106 ausgebildet ist, welches von der Eintrittsöffnung 68 her in das Ventilgehäuse 12 eingesetzt ist, bspw. eingeschraubt ist. Im Bereich der Austrittsöffnung 70 des Ventilgehäuses 12 ist ein Innengewinde vorgesehen, welches das Einsetzen eines zweiten Einlassteils in das Ventilgehäuse 12 erlaubt.

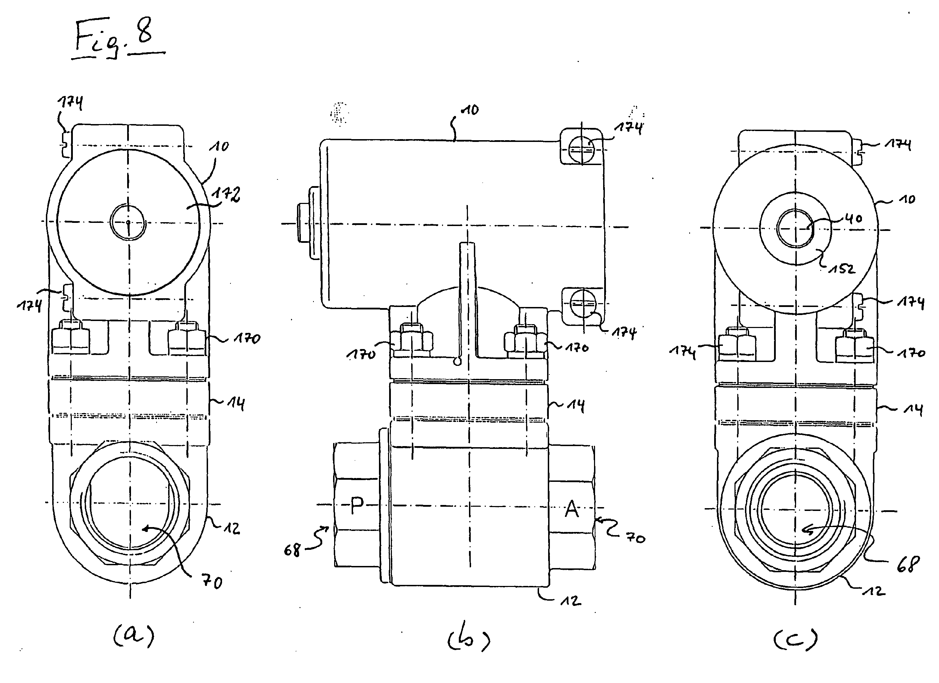

Fig. 8 zeigt verschiedene Außenansichten eines Ventils der in Fig. 7 dargestellten Art. Zu erkennen sind die Schrauben 170, durch die das Betätigungsgehäuse 10, das Zwischengehäuse 14 und das Ventilgehäuse 10 miteinander verschraubt sind. Ferner ist das Betätigungsgehäuse nicht wie bei der Ausführungsform von Fig. 7 durch ein Einschraubteil sondern durch ein Einpressteil 172 verschlossen, das mittels Schrauben 174 fixiert ist. Wie in Fig. 8a und Fig. 8c zu sehen ist, weist das Ventil eine besonders schmale Form auf. Dies ermöglicht einen Platz sparenden Einbau des Ventils bzw. eine Platz sparende Anordnung und ggf. Verschraubung von mehreren Ventilen nebeneinander. Bei einer solchen Anordnung können mehrere Ventilgehäuse 12 auch in einem Block angefertigt werden. Dies gilt ebenso auch für die Betätigungsgehäuse 10.

In Fig. 9 ist ein ähnliches Ventil wie in Fig. 7 dargestellt. Allerdings handelt es sich hierbei um ein 3/2-Wegeventil, d.h. das Ventilgehäuse weist im Unterschied zu der Ausführungsform von Fig. 7 neben der Eintrittsöffnung 68 und der Austrittsöffnung 70 einen dritten Ein- bzw. Ausgang 176 auf. Im Bereich der Austrittsöffnung 70 ist durch ein zweites Ringteil 178 ein zweiter Ventilsitz gebildet. Je nach Stellung des Schwenkhebels 50 schließt der Ventilkörper 80 entweder den ersten Ventilsitz 76 oder der zweiten Ventilsitz 178, so dass wahlweise ein Strömungsweg von dem dritten Ein- bzw. Ausgang 176 zu Eintrittsöffnung 68 oder zur Austrittsöffnung 70 besteht.

Man sieht hier, dass bei einer pneumatischen Betätigung des Kolbens 28 der Ventilkörper 80 gegen den als Ringteil 178 ausgebildeten Ventilsitz schließt. Ohne die Hilfsfederanordnung wäre die Schließkraft des Ventilkörpers 80 gegen das Ringteil 178 eine Funktion des pneumatischen Betätigungsdrucks. Diese Schließkraft wird bspw. für einen pneumatischen Betätigungsdruck von 4 bar ausgelegt. Liegt ein höherer Betätigungsdruck von bspw. 10 bar vor, so bestünde die Gefahr (wenn die Hilfsfeder 158 nicht vorgesehen wäre), dass der Dichtstrumpf 166 beschädigt wird. Hier schafft die Hilfsfederanordnung Abhilfe.

Wenn der Ventilkörper 80 gegen das Ringteil 178 schließt, bildet sich, wie in Fig. 9(b) zu erkennen ist, ein Spalt 180 zwischen dem Kopfteil 38 des Bolzens 36 und dem Flanschteil 150 des Kolbens 28 aus, während gleichzeitig ein verkleinerter Freiraum 160 zwischen dem Bolzenkopf 38 und dem Kolben 28 bestehen bleibt. Der Bolzenkopf 38 steht in dieser Situation weder in Kontakt mit dem Flanschteil 150 noch an seiner zum Freiraum 160 weisenden Stirnfläche in Kontakt mit dem Kolben 28. Durch die Hilfsfeder 158 wird der Flanschteil 150 in der Zeichnung nach rechts gedrückt, d.h. entgegen der Kraft, die aufgrund der Druckluft auf den Kolben 28 wirkt.

Die in den Betätigungsraum 18 einströmende Druckluft wirkt folglich nicht direkt über den Kolben 28 auf den zweiten Arm 54 des Schwenkhebels 50, sondern lediglich indirekt über die Hilfsfeder 158. Unabhängig von dem anliegen Luftdruck wird stets die gleiche Kraft auf den Schwenkhebel 50 ausgeübt, nämlich gerade die Kraft der Hilfsfeder 158, welche somit nach Art eines Kraftbegrenzers wirkt. Folglich ist auch die Kraft, die ein am Schwenkhebel 50 vorgesehener Ventilkörper auf einen Ventilsitz ausübt durch die Hilfsfeder 158 auf einen Betrag begrenzt, der von der Hilfsfeder 158 vorgegeben ist.

Diese Art der Kraftbegrenzung kann bei allen Varianten verwendet werden, bei denen die Druckbelastung des Kolbens zu einer Schließbewegung führt. Es versteht sich, dass bspw. bei der Ausführungsform von Fig. 7 das Betätigungsgehäuse gegenüber dem Ventilgehäuse um 180° verdreht angeordnet sein könnte, wodurch das Ventil durch pneumatische Kraft geschlossen und durch Federkraft geöffnet wird, d.h. umgekehrt zu der gezeigten Anordnung.

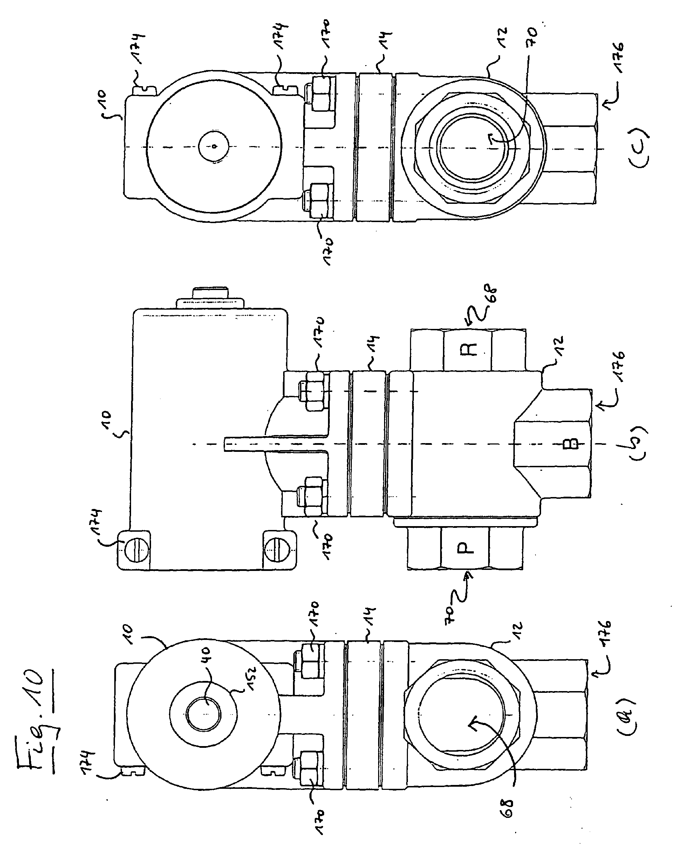

In Fig. 10 sind verschiedene Außenansichten des Ventils von Fig. 9 dargestellt. Auch bei dieser Ausführungsform erlaubt die schmale Gestalt eine Platzsparende Montage bzw. Aneinanderreihung mehrerer Ventile nebeneinander.

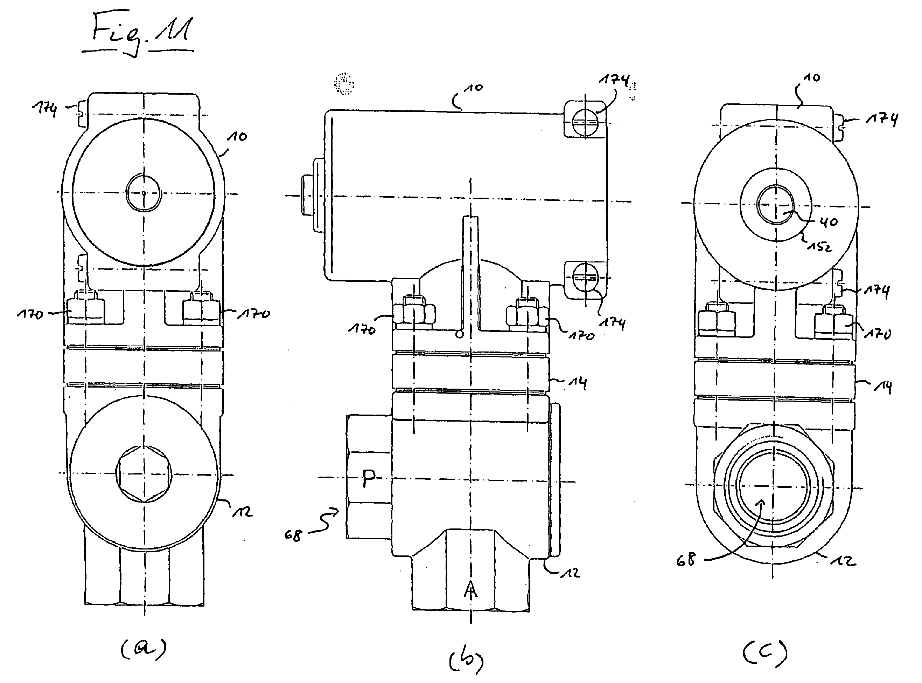

Fig. 11 zeigt verschieden Außenansichten eines 2/2-Wegeventils, das sich von dem in Fig. 7 dargestellten Ventil nur darin unterscheidet, dass es als 2/2-Wege-Eckventil ausgebildet ist.

Bei allen voranstehend beschriebenen Ausführungsformen können das Ventilgehäuse, das Betätigungsgehäuse, eine ggf. als Einsatz vorliegende Aufnahmekammer und/oder ein zwischen dem Ventilgehäuse und dem Betätigungsgehäuse vorgesehenes Zwischengehäuse aus Metall oder Kunststoff, bspw. aus Teflon oder HGBZ, gebildet sein.

### Bezugszeichenliste

- 10: Betätigungsgehäuse
- 12: Ventilgehäuse
- 14: Zwischengehäuse
- 16: Schrauben
- 18: Betätigungsraum
- 20: Stirnplatte
- 22: Stirnplatte
- 24: Einlassöffnung
- 26: Ansatz
- 28: Kolben
- 30: Spiralfeder
- 32: Ringnut
- 34: Dichtring
- 36: Bolzen
- 38: Kopfteil
- 40: Schaftteil
- 42: Ringnut
- 44: Sprengring
- 46: Kolbenteller
- 48: Querbohrung
- 50: Schwenkhebel
- 52: erster Arm
- 54: zweiter Arm
- 56: Stift
- 58: Buchse
- 60: Ring
- 62: Ringausnehmung
- 64: Steg
- 66: Gewinde
- 68: Eintrittsöffnung
- 70: Austrittsöffnung
- 72: Normeinsatz
- 74: Strömungsraum
- 76: Ventilsitz
- 78: abgeschrägte Fläche
- 80: Ventilkörper
- 82: kugelförmiges Teil
- 84: Aufsatz
- 86: Schraube
- 88: Querbohrung
- 90: erste Formplatte
- 92: Erhöhung
- 94: zweite Formplatte
- 95: Querstift
- 96: Ansatz
- 97: Schraube
- 98: Einsatz
- 100: Nut
- 102: Dichtring
- 104: Ringteil
- 106: Einlassteil
- 108: Einlassteil
- 110: Gewindebohrung
- 112: Schraube
- 114: Abflachung
- 116: Stift
- 118: Ausnehmung
- 120: Ausnehmung
- 122: Stirnwand
- 124: Membran
- 126: Halbkugel
- 128: Scheibe
- 130: Ausnehmung
- 132: Ringschulter
- 134: Kugel
- 136: Ring
- 138: topfförmiges Teil
- 140: Abdeckscheibe
- 144: Einschraubteil
- 146: Ringdichtung
- 150: Flanschteil
- 152: Anschraubbuchse
- 154: Stirnseite
- 156: Sprengring
- 158: Hilfsfeder
- 160: Freiraum
- 162: Kugelsegment
- 164: Ring
- 166: Dichtstrumpf
- 168: ringförmige Aufnahme
- 170: Schraube
- 172: Einpressteil
- 174: Schraube
- 176: Ein- bzw. Ausgang
- 178: Ringteil
- 180: Spalt

## Patentansprüche

1. Ventil mit einem an einem Ende eines Schwenkhebels (50) angebrachten Ventilkörper (80), der in einer ersten Schließ- bzw. Schwenkposition gegen einen Ventilsitz (76) schließt, um einen Strömungsweg durch den Ventilsitz (76) zu verschließen, und in einer zweiten Schwenkposition diesen Strömungsweg freigibt, um einen Durchfluss durch das Ventil zu einem Ausgang (70) oder zu mehreren Ausgängen (68, 70, 176) zu ermöglichen, wobei der Schwenkhebel (50) ein zweiarmiger Schwenkhebel (50) mit einer zwischen seinen beiden Armen (52, 54) vorgesehenen Schwenkachse ist, der einen ersten Arm (52) zwischen der Schwenkachse und dem Ventilkörper (80) und einen zweiten Arm (54) zwischen der Schwenkachse des Schwenkhebels (50) und einer Betätigungseinrichtung aufweist, die am zweiten Arm (54) des Schwenkhebels (50) angreift, wobei die pneumatische Betätigungseinrichtung in einer Betätigungsrichtung durch pneumatische Belastung eines Kolbens (28) betätigt wird und der Kolben (28) in die andere Betätigungsrichtung durch den Druck einer Feder (30) beaufschlagt wird, im Bereich der Schwenkachse eine flexible Dichtung (60; 124; 136 - 140; 166) vorgesehen ist, die den Strömungsraum (74) des Ventils vom Betätigungsraum (18) zumindest im Wesentlichen fluiddicht trennt, die Schwenkbewegung des Schwenkhebels (50) jedoch zulässt **dadurch gekennzeichnet,**
**dass** die Betätigungseinrichtung eine pneumatische Betätigungseinrichtung ist, dass der Kolben (28) einen mit pneumatischem Druck belastbaren Kopf, eine mit einem Dichtring (34) versehene Mantelfläche sowie in einem Abstand davon einen Flanschteil (150) aufweist, dass ein Bolzen (36) mit einem Kopfteil (38), der eine Querbohrung (48), die den zweiten Arm (54) des Schwenkhebels (50) aufnimmt und sich zwischen dem Dichtring und dem Flanschteil (150) befindet, sowie einen Schaftteil (40) aufweist, das sich durch den Flanschteil (150) des Kolbens (28) sowie die als Schraubendruckfeder ausgebildete Feder (30) hindurch erstreckt, die sich am Flanschteil abstützt; dass eine Hilfsfeder (158) zwischen einem Anschlag (156) am Schaftteil (40) und dem Flanschteil (150) des Kolbens (28) vorgesehen ist; dass zwischen dem Bolzenkopf (38) und dem Kolben (28) ein Freiraum (160) besteht, der eine axiale Bewegung des Bolzens (36) relativ zum Kolben (28) zulässt; und dass sich bei einem erhöhten Betätigungsdruck der Kolben (28) unter Komprimierung der Feder (30) bewegt, wodurch sich zwischen dem Kopf und dem Flanschteil (150) des Kolbens (28) ein Spalt (180) bildet, wodurch die Kraft der Hilfsfeder (158) die Klemmkraft zwischen dem ersten Arm (52) und dem Ventilsitz (76) auf ein Betrag begrenzt ist, der von der Hilfsfeder (158) vorgegeben ist.

2. Ventil nach Anspruch 1,
**dadurch gekennzeichnet,**
**dass** der Bolzenkopf (38) eine Querbohrung (48) aufweist, die den zweiten Arm (54) des Schwenkhebels (50) in ihrer Mitte zumindest im Wesentlichen spielfrei aufnimmt, wobei auf beiden Seiten der Mitte Freiräume zum Zulassen der Schwenkbewegung vorgesehen sind und/oder dass der Betätigungsraum (18) innerhalb eines Betätigungsgehäuses (10) angeordnet ist, das direkt oder indirekt an das Ventilgehäuse (12) angeschlossen ist und/oder dass die Schwenkachse durch einen Stift (56) gebildet ist, der links und rechts des Schwenkhebels (50) durch mindestens eine Buchse (58) hindurch verläuft, die von der flexiblen Dichtung (60; 124; 136 - 140; 166) umgeben ist.

3. Ventil nach einem der vorherigen Ansprüche,
**dadurch gekennzeichnet,**
**dass** zwischen dem Ventilgehäuse (12) und dem Betätigungsgehäuse (10) eine, in Draufsicht vorzugsweise kreisringförmige, Aufnahmekammer vorgesehen ist, die die flexible Dichtung (60; 124; 136 - 140; 166) aufnimmt, wobei die Aufnahmekammer eine in dem Ventilgehäuse (12) vorgesehene Kammer ist oder eine innerhalb eines Zwischengehäuses (14), das auf das Ventilgehäuse (12) aufgesetzt werden kann, oder eine innerhalb des Betätigungsgehäuses (10) vorgesehene Kammer ist.

4. Ventil nach einem der vorherigen Ansprüche,
**dadurch gekennzeichnet,**
**dass** die flexible Dichtung aus einem Ring (60) besteht, der außen an der Wand der Aufnahmekammer und innen am Schwenkhebel (50) anvulkanisiert oder angeklebt ist und/oder dass der Ring (60) auf zwei Seiten Ringausnehmungen (62) aufweist, zwischen denen ein durchgehender Steg (64) verbleibt, um die Flexibilität der Dichtung sicherzustellen und/oder dass die Verbindung zwischen der flexiblen Dichtung (60) und der Wand der Aufnahmekammer bzw. der Außenseite des Schwenkhebels (50) durch eine dort versehene Aufrauung bzw. ein dort vorgesehenes Gewinde (66) verbessert ist.

5. Ventil nach Anspruch 4,
**dadurch gekennzeichnet,**
**dass** der Durchmesser des Schwenkhebels (50) im Bereich des durchgehenden Stifts (56) vergrößert ist.

6. Ventil nach einem der Ansprüche 1 bis 3,
**dadurch gekennzeichnet,**
**dass** die Dichtung durch eine ringförmige Membran (124) gebildet ist, die in ihrem radial inneren Bereich zwischen zwei Halbkugeln (126) geklemmt ist, die am Schwenkhebel (50) befestigt sind, und die in ihrem radial äußeren Bereich zwischen zwei Scheiben (128) geklemmt ist, die innerhalb der ringförmigen Aufnahmekammer angeordnet sind und einerseits vom Betätigungsgehäuse (10) und andererseits vom Ventilgehäuse (12) geklemmt sind; dass die Halbkugeln (126) eine kugelförmige Außenfläche bilden, die in einer entsprechenden kugelförmigen Ausnehmung der zwei Scheiben (128) schwenkbar gelagert ist; und dass die Scheiben (128) auf gegenüberliegenden Seiten der ringförmigen Membran (124) jeweils eine Ausnehmung (130) aufweisen, um eine Verformung der Membran (124) in diesem Bereich bei einer Verschwenkung des Schwenkhebels (50) zuzulassen.

7. Ventil nach Anspruch 6,
**dadurch gekennzeichnet,**
**dass** die Ausnehmungen (130) der Scheiben (128) sich innerhalb von Ringschultern (132) befinden, die die ringförmige Membran in ihrem radial äußeren Bereich zwischen sich einklemmen und/oder dass die Halbkugeln (126) jeweils eine durchgehende Bohrung aufweisen, durch die sich der Schwenkhebel (50) erstreckt und/oder dass die Halbkugeln (126) auf den Schwenkhebel (50) aufgeschraubt und/oder an diesen angeklebt sind und/oder dass die Halbkugeln (126) und/oder die Scheiben (50) aus Metall oder Kunststoff bestehen.

8. Ventil nach einem der Ansprüche 1 bis 3,
**dadurch gekennzeichnet,**
**dass** der Schwenkhebel (50) im Bereich der Schwenkachse eine Kugelfläche aufweist, die in einer aus zwei Ringen (136) gebildeten kugelförmigen Ausnehmung gelagert ist.

9. Ventil nach Anspruch 8,
**dadurch gekennzeichnet,**
**dass** die zwei Ringe (136) innerhalb eines topfförmigen Teils (138) angeordnet sind, dass mit einer Abdeckscheibe (140) abgeschlossen ist, wobei sich der Schwenkhebel (50) jeweils durch ein Loch im topfförmigen Teil (138) und in der Abdeckscheibe (140) hindurcherstreckt und/oder dass die Kugelfläche am Schwenkhebel (50) durch eine auf den Schwenkhebel aufgesetzte Kugel (134) mit einer Querbohrung gebildet ist und/oder dass die Kugel (134) auf den Schwenkhebel (50) aufgeschraubt oder aufgeklebt ist und/oder dass die Kugel (134) und/oder die Ringe (136) aus Metall oder Kunststoff, z.B. Teflon, bestehen.

10. Ventil nach einem der vorherigen Ansprüche,
**dadurch gekennzeichnet,**
**dass** der Ventilsitz (76) durch ein Ringteil (104) gebildet ist, das in einer formschlüssigen Aufnahme eines Einlassteils (106) montiert ist und mit einer zumindest im Wesentlichen kugelförmigen Fläche des Ventilkörpers (80) zusammenwirkt.

11. Ventil nach einem der vorherigen Ansprüche,
**dadurch gekennzeichnet,**
**dass** der Ventilkörper (80) durch ein zumindest im Wesentlichen kugelförmiges Teil (82) gebildet ist, das eine Querpassage aufweist, die den ersten Arm (52) des Schwenkhebels (50) aufnimmt, und dass der Ventilkörper (80) durch eine Schraube (86) am Schwenkhebel (50) befestigt ist und vorzugsweise dass sich der Kopf der Schraube (86) innerhalb eines nachgiebigen ringförmigen Aufsatzes (84) befindet, der auf einer Seite des Schwenkhebels (50) vorgesehen ist und als Abdichtfläche für den Ventilsitz (76) dient und/oder dass der Kopf der Schraube (86) als Senkkopf ausgebildet ist, der mit einer entsprechenden Senkung am Aufsatz (84) zusammenwirkt, um den Aufsatz (84) am kugelförmigen Teil (82) und am Schwenkhebel (50) zu befestigen und/oder dass die Schraube (86) in ein als Querbohrung (88) des Schwenkhebels (50) ausgebildetes Gewinde eingeschraubt ist.

12. Ventil nach Anspruch 1-1,
**dadurch gekennzeichnet,**
**dass** der Schwenkhebel (50) im Bereich des Ventilkörpers (80) eine Abflachung (114) aufweist, das Gewinde einer Schraube (112) in eine Gewindebohrung (110) des Ventilkörpers eingreift und ein Stirnende der Schraube (112) sich an der Abflachung (114) abstützt.

13. Ventil nach einem der Ansprüche 1 bis 9,
**dadurch gekennzeichnet,**
**dass** der erste Arm (52) des Schwenkhebels (50) blattförmig bzw. biberschwanzförmig ausgebildet ist und dass die flexible Dichtung als Dichtstrumpf (166) ausgebildet ist, der über den ersten Arm (52) gezogen ist und in einen ringförmigen Bereich mündet, der entweder in einer ringförmigen Aufnahme des Ventilgehäuses (12) und/oder in einem zwischen Ventil- und Betätigungsgehäuse angeordneten Zwischengehäuse (14) und/oder im Betätigungsgehäuse (10) sitzt.

14. Ventil nach Anspruch 13,
**dadurch gekennzeichnet,**
**dass** der Schwenkhebel (50) eine Kugelfläche (162) aufweist, die in einem Ring (164) schwenkbar gelagert ist, der in einem Zwischengehäuse (14) zwischen Ventilgehäuse (12) und Betätigungsgehäuse (10) vorgesehen ist und in dem die Schwenkachse des Schwenkhebels (50) aufgenommen ist, wobei das Zwischengehäuse (14) vorzugsweise ein Außenring ist.

15. Ventil nach einem der vorherigen Ansprüche,
**dadurch gekennzeichnet,**
**dass** bei einem Ventil, das bei pneumatischer Betätigung des Schwenkhebels (50) gegen einen Ventilsitz (76) schließt, eine Hilfsfeder (158) vorgesehen ist, die die Schließkraft unabhängig vom Betätigungsdruck begrenzt.

16. Ventil nach einem der vorhergehenden Ansprüche,
**dadurch gekennzeichnet,**
**dass** der Schaftteil (40) aus dem Betätigungsgehäuse (10) hinausragt und der Schaltzustand des Ventils durch einen Positionssensor feststellbar ist, der mit dem freien Ende des Schaftteils (40) zusammenarbeitet, wobei das Schaftteil (40) vorzugsweise durch eine in das Betätigungsgehäuse (10) eingebaute Lagerbuchse verläuft und/oder der Anschlag durch einen Sprengring (156) (Seegering) gebildet ist.

17. Ventil nach einem der vorhergehenden Ansprüche,
**dadurch gekennzeichnet,**
**dass** das Betätigungsgehäuse (10) eine Bohrung (18) zur Aufnahme des Kolbens (28) aufweist und zumindest an einem Ende durch ein Einschraubteil (144) mit Ringdichtung (146) verschlossen ist oder dass das Betätigungsgehäuse (10) eine Bohrung (18) zur Aufnahme des Kolbens (28) aufweist und zumindest an einem Ende durch ein Einpressteil verschlossen ist, das mittels Querbolzen fixiert ist und/oder dass die Bohrung (18) des Betätigungsgehäuses (10) an seiner dem Einschraubteil (144) bzw. Einpressteil gegenüberliegenden Ende mit einer Einschraubbuchse (152) für den Schaftteil (40) des Bolzens (36) versehen ist.

18. Ventil nach einem der vorherigen Ansprüche,
**dadurch gekennzeichnet,**
**dass** das Betätigungsgehäuse (10) zweiteilig ausgebildet ist, wobei ein erstes Teil (10') an dem Ventilgehäuse (12) bzw. am Zwischengehäuse (14) befestigt ist und eine Querbohrung aufweist, die einen Betätigungszylinder (10") aufnimmt, in dem der Kolben (28) und die Feder (30) aufgenommen sind und/oder dass der Betätigungszylinder (10") durch Querstifte (95) am ersten Teil (10') des Betätigungsgehäuses (10) befestigt ist und/oder dass der erste Teil (10') des Betätigungsgehäuses (10) im Bereich des Schwenkhebels (50) eine die Schwenkbewegung des Schwenkhebels (50) zulassende Kammer aufweist und/oder dass die Wandung des Betätigungszylinders (10") im Bereich des Schwenkhebels (50) eine Öffnung aufweist.

19. Ventil nach einem der vorherigen Ansprüche,
**dadurch gekennzeichnet,**
**dass** ein Ventilgehäuse (12; 234), ein Betätigungsgehäuse (10; 200), eine ggf. als Einsatz vorliegende Aufnahmekammer und/oder ein zwischen dem Ventilgehäuse und dem Betätigungsgehäuse vorgesehenes Zwischengehäuse (14) aus Metall oder Kunststoff, bspw. aus Teflon oder HGBZ, bestehen, wobei der Strömungsraum (74) vorzugsweise innerhalb eines Ventilgehäuses (12; 234) angeordnet ist und bspw. als Zweiwege- oder Dreiwegegehäuse ausgelegt ist.

20. Anordnung von mehreren Ventilen nach einem der vorherigen Ansprüche,
**dadurch gekennzeichnet,**
**dass** die Betätigungseinrichtungen aller Ventile in einem gemeinsamen Betätigungsgehäuseblock vorgesehen sind und/oder dass die Strömungswege aller Ventile in einem gemeinsamen Ventilgehäuseblock ausgebildet sind und/oder dass die Zwischengehäuse aller Ventile in einem gemeinsamen Zwischengehäuseblock zusammengefasst sind.

## Claims

1. A valve having a valve body (80) attached to one end of a pivot lever (50), the valve body closing against a valve seat (76) in a first closing position or pivoting position in order to close a flow path through the valve seat (76) and freeing this flow path in a second pivotal position in order to enable flow through the valve to an outlet (70) or to a plurality of outlets (68, 71, 176), wherein the pivot lever (50) is a two-armed lever (50) having a pivot axis provided between its two arms (52, 54) which has a first arm (52) between the pivot axis and the valve body (80) and a second arm (54) between the pivot axis of the pivot lever (50) and an actuating device which acts on the second arm (54) of the pivot lever (50), wherein the pneumatic actuation device is actuated in an actuating direction by pneumatic loading of a piston (28) and the piston 28 is loaded in the other direction of actuation by the pressure of a spring (30), wherein a flexible seal (60; 124; 136 - 140; 166) is provided in the region of the pivot axis which separates the flow space (74) of the valve from the actuating space (18) in at least substantially fluid-tight manner but permits the pivot movement of the pivot lever (50),
**characterized in that**
the actuating device is a pneumatic actuating device, **in that** the piston (28) has a head which can be loaded with pneumatic pressure, a jacket surface provided with a seal ring (34) and also, at a spacing from it, has a flange part (50), **in that** a pin (36) having a head part (38) with a transverse bore (48) which receives the second arm (54) of the pivot lever (50) and is located between the sealing ring and the flange part (150) as well as a shaft part (40) which extends through the flange part (150) of the piston (28) and also through the spring (30) which is formed as a compression coil spring and is supported against the flange part; **in that** an auxiliary spring (158) is provided between an abutment (156) at the shaft part (40) and the flange part (150) of the piston (28); **in that** a free space (160) exists between the bolt head (38) and the piston (28) which permits an axial movement of the pin (36) relative to the piston (28), and **in that** with an elevated actuation pressure the piston (28) moves while compressing the spring (30) whereby a gap (180) forms between the head and the flange part (150) of the piston (28) whereby the force of the auxiliary spring (158) restricts the clamping force between the first arm (52) and the valve seat (76) to an amount which is preset by the auxiliary spring (158).

2. A valve in accordance with claim 1,
**characterized in that**
the bolt head (38) has a transverse bore (48), which receives the second arm (54) of the pivot lever (50) essentially play-free at its centre, with free spaces being provided to both sides of the centre to permit the pivotal movement and/or **in that** the actuating space (18) is arranged within an actuating housing (10) which is directly or indirectly connected to the valve housing (12), and/or **in that** the pivot axis is formed by a pin (56) which extends at the left and the right of the pivot lever (50) through at least one sleeve (58) which is surrounded by the flexible seal (60; 124; 126 - 140; 166).

3. A valve in accordance with one of the preceding claims,
**characterized in that**
a receiving chamber, which is preferably of circular ring-shape in plan view, is provided between the valve housing (12) and the actuating housing (10) and receives the flexible seal (60; 124; 126 - 140; 166), with the receiving chamber being a chamber provided in the valve housing (12) or a chamber within an intermediate housing (14) which can be mounted on the valve housing (12) or a chamber provided inside the actuation housing (10).

4. A valve in accordance with one of the preceding claims,
**characterized in that**
the flexible seal comprises a ring (60) which is vulcanized outwardly onto the wall of the receiving chamber and inwardly to the pivot lever (50) and/or **in that** the ring (60) has ring cutouts (62) at two sides between which a continuous web (64) remains in order to ensure the flexibility of the seal and/or **in that** the connection between the flexible seal (60) and the wall of the receiving chamber and the outer side of the pivot lever (50) respectively is improved by roughening provided there and/or by a thread (66) provided there.

5. A valve in accordance with claim 4,
**characterized in that**
the diameter of the pivot lever (50) is enlarged in the region of the through going pin (56).

6. A valve in accordance with one of the claims 1 to 3,
**characterized in that**
the seal is formed by a ring-like membrane (124) which is clamped in its radially inner region between two half balls (126) which are secured to the pivot lever (50) and is clamped in its radially outer region between two discs (128) which are disposed within the ring-like receiving chamber and on the one hand clamped by the actuating housing (10) and on the other hand by the valve housing (12); **in that** the half balls (126) form a spherical outer surface which is pivotally journalled in a corresponding spherical recess of the two discs (128) and **in that** the discs (128) each have a cutout (130) on oppositely disposed sides of the ring-like membrane (124) in order to permit a deformation of the membrane (124) in this region on pivoting of the pivot lever (50).

7. A valve in accordance with claim 6,
**characterized in that**
the recesses (130) of the discs (128) are located inside of ring shoulders (132) which clamp the ring-like membrane between them in its radially outer region and/or **in that** the half balls (126) respectively have a through going bore through which the pivot lever (50) extends and/or **in that** the half balls (126) are screwed onto the pivot lever (50) and/or adhesively bonded to it and/or **in that** the half balls (126) and/or the discs (50) consist of metal or plastic.

8. A valve in accordance with one of the claims 1 to 3,
**characterized in that**
the pivot lever (50) has, in the region of the pivot axis, a spherical surface which is journalled in a spherical recess formed from two rings (136).

9. A valve in accordance with claim 8,
**characterized in that**
the two rings (136) are arranged inside a pot-like part (138) which is closed by a cover disc (140), with the pivot lever (50) in each case extending through a hole in the pot-like part (138) and in the cover disc (140) and/ or **in that** the spherical surface at the pivot lever (50) is formed by a ball (134) mounted on the pivot lever and having a transverse bore and/or **in that** the ball (134) is screwed onto or adhesively bonded to the pivot lever (50) and/or **in that** the ball (134) and/or the rings (136) consist of metal or plastic, for example Teflon.

10. A valve in accordance with one of the preceding claims,
**characterized in that**
the valve seat (76) is formed by a ring part (104) which is mounted in a form-matched recess of an inlet part (106) and cooperates with an at least substantially spherical surface of the valve body (80).

11. A valve in accordance with one of the preceding claims,
**characterized in that**
the valve body (80) is formed by an at least substantially spherical part (82) which has a transverse passage which receives the first arm (52) of the pivot lever (50), and **in that** the valve body (80) is secured by a screw (86) to the pivot lever (50) and preferably **in that** the head of the screw (86) is located within a resilient ring-like attachment (84) which is located to one side of the pivot lever (50) and serves as a sealing surface for the valve seat (76) and/or **in that** the head of the screw (86) is formed as a countersunk head which cooperates with a corresponding countersink at the attachment (84) in order to secure the attachment (84) to the spherical part (82) and to the pivot lever (50) and/or **in that** the screw (86) is screwed into a thread formed as a transverse bore (88) of the pivot lever (50).

12. A valve in accordance with claim 11,
**characterized in that**
the pivot lever (50) has a flattened portion (114) in the region of the valve body (80), the thread of a screw (112) engages in a threaded bore (110) of the valve body and an end of the screw (112) is braced against the flattened portion (114).

13. A valve in accordance with one of the claims 1 to 9,
**characterized in that**
the first arm (52) of the pivot lever (50) is of leaf shape or of beaver-tail shape and **in that** the flexible seal is formed as a sealing sock (166) which is drawn over the first arm (52) and opens into a ring-like region which either sits in a ring-like recess of the valve housing (12) and/or in an intermediate housing (14) arranged between the valve housing and the actuating housing and/or in the actuating housing (10).

14. A valve in accordance with claim 13,
**characterized in that**
the pivot lever (50) has a spherical surface (162) which is pivotally journalled in a ring (164) which is provided in an intermediate housing (14) between the valve housing (12) and the actuating housing (10) in which the pivot axle of the pivot lever (50) is received, with the intermediate housing (14) preferably being an outer ring.

15. A valve in accordance with one of the preceding claims,
**characterized in that**
an auxiliary spring (158) is provided in a valve which closes against a valve seat (76) on pneumatic actuation of the pivot lever (50) and restricts the closing force independently of the actuating pressure.

16. A valve in accordance with one of the preceding claims,
**characterized in that**
the shaft part (40) projects out of the actuating housing (10) and the switching state of the valve can be detected by a position sensor which cooperates with the free end of the shaft part (40), with the shaft part (40) preferably extending through a bearing sleeve built into the actuating housing (10) and/or the abutment is formed by a spring ring (156) (circlip).

17. A valve in accordance with one of the preceding claims,
**characterized in that**
the actuating housing (10) has a bore (18) for receiving the piston (28) and is closed at least at one end by a screwed in part with a ring seal (146) or **in that** the actuating housing (10) has a bore (18) to receive the piston (28) and is closed at least at one end by a pressed in part which is fixed by means of a transverse pin and/or in that the bore (18) of the actuating housing (10) is provided at its end opposite to the screwed in part (144) or to the pressed in part with a screwed in sleeve (152) for the shaft part (40) of the pin (36).

18. A valve in accordance with one of the preceding claims,
**characterized in that**
the actuating housing (10) is made in two parts, with a first part (10') being secured to the valve housing (12) or to an intermediate housing (14) and having a transverse bore which receives an actuating cylinder (10") in which the piston (28) and the spring (30) are received and/or **in that** the actuating cylinder (10") is secured by transverse pins (95) to the first part (10') of the actuating housing (10) and/or **in that** the first part (10') of the actuating housing (10) has a chamber in the region of the pivot lever (50) which permits a pivotal movement of the pivot lever (50) and/or **in that** the wall of the actuating cylinder (10") has an opening in the region of the pivot lever (50).

19. A valve in accordance with one of the preceding claims,
**characterized in that**
a valve housing (12; 234), an actuating housing (10; 200), and optionally a receiving chamber present as an insert and/or an intermediate housing (14) provided between the valve housing and the actuating housing consist of metal or plastic, for example Teflon or HGBZ, with the flow space (74) preferably being disposed within a valve housing (12; 234) and, for example, being designed as a two-way housing or three-way housing.

20. Arrangement of a plurality of valves in accordance with one of the preceding claims,
**characterized in that**
the actuating devices of all valves are provided in a common actuating housing block and/or **in that** the flow paths of all valves are formed in a common valve housing block and/or **in that** the intermediate housings of all valves are combined into a common intermediate housing block.

## Revendications

1. Valve comportant un opercule de valve (80) agencé à une extrémité d'un levier pivotant (50), opercule qui ferme contre un siège de valve (76) dans une première position de fermeture ou de pivotement, afin d'obturer un trajet d'écoulement à travers le siège de valve (76), et qui libère ce trajet d'écoulement dans une seconde position de pivotement, afin de permettre un écoulement à travers la valve jusqu'à une sortie (70) ou jusqu'à plusieurs sorties (68, 70, 176), le levier pivotant (50) étant un levier pivotant (50) à deux bras muni d'un axe de pivotement prévu entre ses deux bras (52, 54), qui comprend un premier bras (52) entre l'axe de pivotement et l'opercule de valve (80) et un second bras (54) entre l'axe de pivotement du levier pivotant (50) et un dispositif d'actionnement qui attaque le second bras (54) du levier pivotant (50), le dispositif d'actionnement pneumatique étant actionné dans une direction d'actionnement par une sollicitation pneumatique d'un piston (28) et le piston (28) étant sollicité dans l'autre direction d'actionnement par la pression d'un ressort (30), un joint flexible (60 ; 124 ; 136 - 140 ; 166) étant prévu dans la zone de l'axe de pivotement, qui sépare de façon au moins sensiblement étanche aux fluides l'espace d'écoulement (74) de la valve vis-à-vis de l'espace d'actionnement (18), mais qui permet le mouvement de pivotement du levier pivotant (50),
**caractérisée en ce que**
le dispositif d'actionnement est un dispositif d'actionnement pneumatique, **en ce que** le piston (28) présente une tête susceptible d'être chargée par une pression pneumatique et une surface enveloppe pourvue d'un joint annulaire (34), ainsi qu'une partie de bride (150) à distance de ladite surface, **en ce qu'**un boulon (36) comporte une partie de tête (38) qui présente un perçage transversal (48) recevant le second bras (54) du levier pivotant (50) et situé entre le joint annulaire et la partie de bride (150), ainsi qu'une partie de tige (40) s'étendant à travers la partie de bride (150) du piston (28) ainsi qu'à travers le ressort (30) réalisé sous forme de ressort de compression hélicoïdal qui prend appui contre la partie de bride ; **en ce qu'**il est prévu un ressort auxiliaire (158) entre une butée (156) sur la partie de tige (40) et la partie de bride (150) du piston (28) ; **en ce qu'**un intervalle libre (160) existe entre la tête de boulon (38) et le piston (28), qui permet un mouvement axial du boulon (36) par rapport au piston (28) ; et **en ce que** lors d'une augmentation de la pression d'actionnement, le piston se déplace sous la compression du ressort (30), suite à quoi une fente (180) se forme entre la tête et la partie de bride (150) du piston (28), ce qui a pour effet que la force du ressort auxiliaire (158) limite la force de serrage entre le premier bras (52) et le siège de valve (76) à une valeur prédéterminée par le ressort auxiliaire (158).

2. Valve selon la revendication 1,
**caractérisée en ce que**
la tête de boulon (38) présente un perçage transversal (48) qui reçoit dans son milieu au moins sensiblement sans jeu le second bras (54) du levier pivotant (50), des intervalles libres étant prévus de part et d'autre du milieu pour permettre le mouvement de pivotement, et/ou **en ce que** l'espace d'actionnement (18) est disposé à l'intérieur d'un boîtier d'actionnement (10) qui est raccordé directement ou indirectement au boîtier de valve (12) et/ou **en ce que** l'axe de pivotement est formé par une broche (56) qui traverse au moins une douille (58) à la gauche et à la droite du levier pivotant (50), douille qui est entourée par le joint flexible (60 ; 124 ; 136 - 140 ; 166).

3. Valve selon l'une des revendications précédentes,
**caractérisée en ce que**
entre le boîtier de valve (12) et le boîtier d'actionnement (10) est prévue une chambre de réception, de préférence circulaire en vue de dessus, qui reçoit le joint flexible (60 ; 124 ; 136 - 140 ; 166), la chambre de réception étant une chambre prévue dans le boîtier de valve (12) ou une chambre prévue à l'intérieur du boîtier intermédiaire (14) pouvant être posé sur le boîtier de valve (12), ou bien une chambre prévue à l'intérieur du boîtier d'actionnement (10).

4. Valve selon l'une des revendications précédentes,
**caractérisée en ce que**
le joint flexible est constitué par un anneau (60) qui est vulcanisé ou collé à l'extérieur sur la paroi de la chambre de réception et à l'intérieur sur le levier pivotant (50), et/ou **en ce que** l'anneau (60) présente sur deux côtés des évidements annulaires (62) entre lesquels demeure une âme continue (64) pour assurer la flexibilité du joint, et/ou **en ce que** la liaison entre le joint flexible (60) et la paroi de la chambre de réception ou le côté extérieur du levier pivotant (50) est améliorée par une rugosité ou par un pas de vis (66) qui y est prévu.

5. Valve selon la revendication 4,
**caractérisée en ce que**
le diamètre du levier pivotant (50) est agrandi dans la zone de la broche traversante (56).

6. Valve selon l'une des revendications 1 à 3,
**caractérisée en ce que**
le joint est formé par une membrane annulaire (124) qui est serrée, dans sa zone radialement intérieure, entre deux hémisphères (126) qui sont fixés sur le levier pivotant (50), et qui est serrée, dans sa zone radialement extérieure, entre deux plaques (128) qui sont agencées à l'intérieur de la chambre de réception annulaire et qui sont serrées d'une part par le boîtier d'actionnement (10) et d'autre part par le boîtier de valve (12) ; **en ce que** les hémisphères (126) forment une surface extérieure sphérique qui est montée en pivotement dans un évidement sphérique correspondant des deux plaques (128) ; et **en ce que** les plaques (128) présentent sur des côtés opposés de la membrane annulaire (124) chacune un évidement (130) pour permettre une déformation de la membrane (124) dans cette zone lors d'un pivotement du levier pivotant (50).

7. Valve selon la revendication 6,
**caractérisée en ce que**
les évidements (130) des plaques (128) se trouvent à l'intérieur d'épaulements annulaires (132) qui serrent entre eux la membrane annulaire dans sa zone radialement extérieure et/ou **en ce que** les hémisphères (126) présentent chacun un perçage traversant à travers lequel s'étend le levier pivotant (50), et/ou **en ce que** les hémisphères (126) sont vissés sur le levier pivotant (50) et/ou sont collés sur celui-ci et/ou **en ce que** les hémisphères (126) et/ou les plaques (50) sont constituées en métal ou en matière plastique.

8. Valve selon l'une des revendications 1 à 3,
**caractérisée en ce que**
le levier pivotant (50) présente dans la zone de l'axe de pivotement une surface sphérique qui est montée dans un évidement sphérique formé par deux anneaux (136).

9. Valve selon la revendication 8,
**caractérisée en ce que**
les deux anneaux (136) sont agencés à l'intérieur d'une partie (138) en forme de pot qui est refermée par une plaque de couverture (140), le levier pivotant (50) s'étendant à travers un trou dans la partie (138) en forme de pot et dans la plaque de couverture (140), et/ou **en ce que** la surface sphérique sur le levier pivotant (50) est formée par une bille (134) posée sur le levier pivotant et présentant un perçage transversal, et/ou **en ce que** la bille (134) est vissée ou collée sur le levier pivotant (50), et/ou **en ce que** la bille (134) et/ou les anneaux (136) sont constitués en métal ou en matière plastique, par exemple en Téflon.

10. Valve selon l'une des revendications précédentes,
**caractérisée en ce que**
le siège de valve (76) est formé par une pièce annulaire (104) qui est montée dans un logement de forme correspondante d'une partie d'entrée (106) et qui coopère avec une surface au moins sensiblement sphérique de l'opercule de valve (80).

11. Valve selon l'une des revendications précédentes,
**caractérisée en ce que**
l'opercule de valve (80) est formé par une pièce (82) au moins sensiblement sphérique qui présente un passage transversal qui reçoit le premier bras (52) du levier pivotant (50), et **en ce que** l'opercule de valve (80) est fixé par une vis (86) sur le levier pivotant (50) et de préférence **en ce que** la tête de la vis (86) se trouve à l'intérieur d'un talon annulaire flexible (84) qui est prévu sur un côté du levier pivotant (50) et sert de surface d'étanchement pour le siège de valve (76), et/ou en ce que la tête de la vis (86) est réalisée sous forme de tête conique qui coopère avec un lamage correspondant sur le talon (84) pour fixer le talon (84) sur la partie sphérique (82) et sur le levier pivotant (50), et/ou **en ce que** la vis (86) est vissée dans un taraudage réalisé sous forme de perçage transversal (88) du levier pivotant (50).

12. Valve selon la revendication 11,
**caractérisée en ce que**
le levier pivotant (50) présente dans la zone de l'opercule de valve (80) un méplat (114), **en ce que** le filetage d'une vis (112) s'engage dans un perçage taraudé (110) de l'opercule de valve et en cde qu'une extrémité frontale de la vis (112) prend appui contre le méplat (114).

13. Valve selon l'une des revendications 1 à 9,
**caractérisée en ce que**
le premier bras (52) du levier pivotant (50) est réalisé en forme de la lame ou en forme de "queue de castor" et **en ce que** le joint flexible est réalisé sous forme de manchette d'étanchéité (166) qui est tirée pardessus le premier bras (52) et qui débouche dans une zone annulaire qui repose dans un logement annulaire du boîtier de valve (12) et/ou dans un boîtier intermédiaire (14) agencé entre le boîtier de valve et le boîtier d'actionnement et/ou dans le boîtier d'actionnement (10).

14. Valve selon la revendication 13,
**caractérisée en ce que**
le levier pivotant (50) présente une surface sphérique (162) qui est montée en pivotement dans un anneau (164) qui est prévu dans un boîtier intermédiaire (14) entre le boîtier de valve (12) et un boîtier d'actionnement (10) et dans lequel est logé l'axe de pivotement du levier pivotant (50), le boîtier intermédiaire (14) étant de préférence un anneau extérieur.

15. Valve selon l'une des revendications précédentes,
**caractérisée en ce que**
pour une valve qui ferme contre un siège de valve (76) lors d'un actionnement pneumatique du levier pivotant (50), il est prévu un ressort auxiliaire (158) qui limite la force de fermeture indépendamment de la pression d'actionnement.

16. Valve selon l'une des revendications précédentes,
**caractérisée en ce que**
la partie de tige (40) dépasse hors du boîtier d'actionnement (10) et **en ce que** l'état de commutation de la valve peut être constaté par un capteur de position qui coopère avec l'extrémité libre de la partie de tige (40), la partie de tige (40) s'étendant de préférence à travers un coussinet monté dans le boîtier d'actionnement (10) et/ou **en ce que** la butée est formée par un jonc (156) (anneau de retenue type Seeger).

17. Valve selon l'une des revendications précédentes,
**caractérisée en ce que**
le boîtier d'actionnement (10) présente un perçage (18) pour recevoir le piston (28) et est fermé au moins à une extrémité par une pièce à visser (144) munie d'un joint annulaire (146), ou **en ce que** le boîtier d'actionnement (10) présente un perçage (18) pour recevoir le piston (28) et est fermé au moins à une extrémité par une pièce enfoncée à la presse qui est fixée au moyen d'un boulon transversal, et/ou **en ce que** le perçage (18) du boîtier d'actionnement (10) est pourvu, à son extrémité opposée à la pièce à visser (144) ou à la pièce à enfoncer à la presse, par une douille à visser (152) pour la partie de tige (40) du boulon (36).

18. Valve selon l'une des revendications précédentes,
**caractérisée en ce que**
le boîtier d'actionnement (10) est réalisé en deux parties, une première partie (10') étant fixée sur le boîtier de valve (12) ou sur le boîtier intermédiaire (14) et présentant un perçage transversal qui reçoit un cylindre d'actionnement (10") dans lequel sont logés le piston (28) et le ressort (30), et/ou **en ce que** le cylindre d'actionnement (10") est fixé sur la première partie (10') du boîtier d'actionnement (10) par des broches transversales (95), et/ou **en ce que** la première partie (10') du boîtier d'actionnement (10) présente dans la zone du levier pivotant (50) une chambre permettant le mouvement de pivotement du levier pivotant (50), et/ou **en ce que** la paroi du cylindre d'actionnement (10") présente une ouverture dans la zone du levier pivotant (50).

19. Valve selon l'une des revendications précédentes,
**caractérisée en ce que**
un boîtier de valve (12 ; 234), un boîtier d'actionnement (10 ; 200), une chambre de réception qui se présente le cas échéant sous forme d'insert et/ou un boîtier intermédiaire (14) prévu entre le boîtier de valve et le boîtier d'actionnement sont constitués en métal ou en matière plastique, par exemple en Téflon ou en HGBZ, l'espace d'écoulement (74) étant agencé de préférence à l'intérieur d'un boîtier de valve (12 ; 234) et étant conçu par exemple sous forme de boîtier à deux voies ou à trois voies.

20. Agencement de plusieurs valves selon l'une des revendications précédentes,
**caractérisé en ce que**
les dispositifs d'actionnement de toutes les valves sont prévus dans un bloc de boîtier d'actionnement commun et/ou **en ce que** les voies d'écoulement de toutes les valves sont réalisées dans un bloc de boîtier de valve commun et/ou **en ce que** les boîtiers intermédiaires de toutes les valves sont regroupés dans un bloc de boîtier intermédiaire commun.
